(19) Europäisches Patentamt
European Patent Office
Office européen des brevets

(11) EP 4 067 114 B1

(12) # EUROPEAN PATENT SPECIFICATION

(45) Date of publication and mention of the grant of the patent:
**24.01.2024 Bulletin 2024/04**

(21) Application number: **22153428.2**

(22) Date of filing: **26.01.2022**

(51) International Patent Classification (IPC):
***B60C 1/00*** *(2006.01)* ***B60C 3/04*** *(2006.01)*
***B60C 11/03*** *(2006.01)* ***C08L 9/06*** *(2006.01)*
***B60C 11/00*** *(2006.01)*

(52) Cooperative Patent Classification (CPC):
(C-Sets available)
**B60C 3/04; B60C 1/0016; B60C 11/0304; B60C 11/0306; B60C 11/033; C08L 9/06;**
B60C 2011/0025; B60C 2011/0344;
B60C 2011/0383; B60C 2011/0393 (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2021 JP 2021062977**

(43) Date of publication of application:
**05.10.2022 Bulletin 2022/40**

(73) Proprietor: **Sumitomo Rubber Industries, Ltd.**
**Kobe-shi, Hyogo-ken 651-0072 (JP)**

(72) Inventor: **NAKATANI, Masako**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2019/133007** **WO-A1-2019/239570**
**JP-A- 2021 025 006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/06, C08K 3/04, C08K 3/36, C08K 5/548, C08L 9/00, C08L 9/06**

## Description

TECHNICAL FIELD

The present invention relates to a tire.

BACKGROUND OF THE INVENTION

In recent years, as environmental regulations have become stricter, there has been an increasing demand for a tire having an excellent fuel efficiency. As one of methods for realizing fuel efficiency, a method of reducing a thickness of a rubber has been proposed to reduce a tire weight (JP 2014-004844 A). Other known tires are disclosed in the documents JP 2021025006 A, WO 2019/133007 A and WO 2019/239570 A.

SUMMARY OF THE INVENTION

However, in a tire with a relatively thin rubber thickness, a rubber surface is easily cooled in a low temperature environment, and when the rubber surface is cooled, followability to the road surface decreases, and therefore, the tire has a problem that there is a concern about decrease in steering stability on a snowy road surface.
It is an object of the present invention to improve steering stability on a snowy road surface even in a tire with a relatively thin rubber thickness.
As a result of intensive studies for solving the above-described problem, the present inventor has found that a tire having improved steering stability on a snowy road surface can be obtained by, in a tire in which a ratio of a tire weight to the maximum load capacity is equal to or less than a predetermined value, on top of providing one or more circumferential grooves and land parts partitioned by the one or more circumferential grooves and having a plurality of lateral grooves on a tread part, setting a glass transition temperature (Tg) of a rubber composition of the tread part within a predetermined range, setting a total styrene amount in a rubber component of the rubber composition to equal to or less than a predetermined value, and further setting a lateral groove area ratio of at least one land part within a predetermined range, and conducted further studies to complete the present invention.
That is, the present invention relates to a tire as defined in claim 1.
According to the present invention, a tire having improved steering stability on a snowy road surface can be provided even when the tire weight with respect to the maximum load capacity is reduced.

BRIEF DESCRIPTION OF THE DRAWINGS

FIG. 1 is a development view of a tread part showing one embodiment of the present invention.
FIG. 2 is a development view of a tread part showing one embodiment of the present invention.
FIG. 3 is a development view of a tread part showing one embodiment of the present invention.

DETAILED DESCRIPTION

The tire of the present invention is a tire comprising a tread part, the tread part having a tread end To placed outside a vehicle and a tread end Ti placed inside the vehicle when mounted on the vehicle, and having one or more circumferential grooves extending continuously in a tire circumferential direction and two or more land parts partitioned by the circumferential grooves between the tread end To and the tread end Ti, the land part having a plurality of lateral grooves extending in a tire width direction, the tread part comprising a rubber composition having a glass transition temperature (Tg) of -40°C to -15°C, the rubber composition comprising a rubber component having a total styrene amount (S) of less than 20.0% by mass in the rubber component, wherein a lateral groove area ratio (R) of at least one land part of the land parts satisfies the following condition (1), and wherein a weight (WT) (kg) and the maximum load capacity ($W_L$) (kg) of the tire satisfy the following condition (2):

$$(1)\ 10\% \le R \le 40\%$$

$$(2)\ WT/W_L \le 0.015$$

Although it is not intended to be bound by theory, the following can be considered as a mechanism for improving steering stability on a snowy road surface while reducing the tire weight with respect to the maximum load capacity in the tire of the present invention. That is, such tire having a reduced tire weight has a relatively thin rubber thickness, so that a rubber surface is easily cooled in a low temperature environment, and when the rubber surface is cooled, followability to the road surface decreases, and therefore, there is a concern about decrease in steering stability on a snowy road surface. However, the tire of the present invention is characterized in that (1) a total styrene amount (S) in the rubber component is less than 20.0% by mass, so that aggregation of a styrene part in a rubber matrix is suppressed, and it becomes easy to obtain followability to the road surface, (2) Tg of the rubber composition of the tread part is -40°C to -15°C, so that heat generation becomes high even in the low temperature environment, (3) aggregation of the styrene part is further suppressed by increasing the temperature of the rubber surface, and (4) a lateral groove area ratio in a land part is 10 to 40%, so that the surface of the land part becomes easily deformed even in the low temperature environment. In addition, these features can work cooperatively to allow for improvement in followability to the road surface, and therefore it is considered that a remarkable effect that steering stability on a snowy road surface is improved as well as the tire weight with respect to the maximum load capacity is reduced is achieved.

In the above-described tire, the change in Tg of the rubber composition, before and after the rubber composition being immersed in acetone for 72 hours to extract a soluble component in accordance with JIS K 6229, is preferably 15°C or greater.

By increasing the Tg of the rubber composition by use of a component such as a plasticizing agent extracted with acetone, it is considered that it becomes possible to increase heat generation without further impairing followability even in a low temperature environment. A change in rubber hardness due to a temperature change is considered to be strongly influenced by the rubber matrix, while a plasticizing agent, resin, and the like having a low-molecular weight are dissolved in the rubber, so that it is considered that they do not affect the hardness of the rubber surface as much as the rubber matrix even in the low temperature environment.

In the above-described tire, the total styrene amount (S) and the tire weight (WT) preferably satisfy the following condition (3):

$$(3)\ S/WT \leq 3.0$$

It is considered that steering stability in a low temperature environment becomes easily improved by reducing the styrene amount as the tire weight decreases. This is because the lighter the tire becomes, the smaller the force that presses the land part against the road surface becomes, and therefore it is considered that, as the tire becomes lighter, even a slight aggregation of the styrene part has a greater effect on the tread surface.

In the above-described tire, the rubber composition preferably satisfies the following condition (4):

$$(4)\ 0°C \tan\delta / 30°C \tan\delta > 2.0$$

(0°C tan δ represents a loss tangent measured under a condition of a temperature at 0°C, a frequency of 10 Hz, an initial strain of 10%, and a dynamic strain of 2.5%, and 30°C tan δ represents a loss tangent measured under a condition of a temperature at 30°C, a frequency of 10 Hz, an initial strain of 5%, and a dynamic strain of 1%.)

It is considered that, by increasing heat generation at a low temperature by more than twice at a normal temperature, a sufficient heat generation can be secured even at the low temperature and followability to the road surface can be obtained.

In the above-described tire, a difference between a rubber hardness at -10°C and a rubber hardness at 25°C of the rubber composition is preferably 3 to 18.

It is considered that, by reducing temperature dependence for hardness of the rubber composition, deterioration of steering stability in a low temperature environment can be suppressed.

In the above-described tire, the rubber component preferably comprises a modified styrene-butadiene rubber.

It is considered that dispersion of a filler is improved due to an influence of a functional group of the modified styrene-butadiene rubber, so that aggregation of the filler can be prevented and followability of the rubber composition can be improved.

In the above-described tire, the rubber composition comprises an aromatic ring-containing resin a content of which is preferably 5 parts by mass or more based on 100 parts by mass of the rubber component.

It is considered that the aromatic ring-containing resin exhibits compatibility with a rubber comprising a styrene part in the rubber component (a styrene-butadiene rubber, etc.) and can be easily improved in heat generation without impairing followability.

In the above-described tire, the rubber composition preferably comprises a vulcanized rubber particle.

Since the vulcanized rubber particle has a hardness similar to that of the rubber matrix in which a domain is formed in advance, the inclusion of the vulcanized rubber particle causes fine concave and convex to be formed on the rubber surface, and therefore it is considered that a scratching effect can further be obtained on a tread surface in a state of high followability.

In the above-described tire, it is preferable that the number of the circumferential groove is three or more, and the tread part has a pair of shoulder land parts and two or more center land parts, the pair of shoulder land parts being partitioned by a pair of outermost circumferential grooves located at each outermost side in a tire width direction and the two or more center land parts being located between the pair of shoulder land parts.

By dividing the tread part into four or more parts in a width direction, the load transmitted to each land part becomes increased, allowing for a pressure for pressing the rubber surface against the road surface to be increased, and it is considered that steering stability on a snowy road surface can be further improved.

In the above-described tire, a groove width of at least one of the pair of outermost circumferential grooves is preferably narrower than that of at least one of the circumferential grooves that are not the pair of outermost circumferential grooves. Moreover, the at least one outermost circumferential groove having a groove width narrower than at least one of the circumferential grooves that are not the outermost circumferential grooves is preferably an outermost circumferential groove on the tread end To side among the pair of outermost circumferential grooves, more preferably a pair of outermost circumferential grooves on both the tread end To side and Ti side.

At the tread part of the tire during turning, a pressure outside in a tire width direction inevitably tends to be increased, which degree tends to be greater on the tread end To side than on the tread end Ti side, so that a reaction force on the shoulder land part can be increased by narrowing the groove width as described above, and it is considered that steering stability on a snowy road surface can be easily improved.

In the above-described tire, it is preferable that, of the pair of shoulder land parts, at least one shoulder land part has a lateral groove, one end of which lateral groove reaches a tread grounding end and the other end of which lateral groove does not reach the outermost circumferential groove but stays in the land part, of the plurality of lateral grooves.

When one end of the lateral groove reaches the tread grounding end, a shear deformation at the grounding end becomes easy to be obtained, and when the other end of the lateral groove stays in the land part, a reaction force also becomes easy to be obtained, so that it is considered that steering stability on a snowy road surface becomes easy to be obtained.

In the above-described tire, it is preferable that, of the two or more center land parts, at least one center land part has a lateral groove, one end of which lateral groove connects with one of the two circumferential grooves partitioning the center land part and the other end of which lateral groove does not reach the other circumferential groove but stays in the land part, of the plurality of lateral grooves.

This is because that, with such configuration, a pattern rigidity of the center land part can be increased.

In the above-described tire, it is preferable that the two circumferential grooves partitioning the center land part consist of a circumferential groove having a large distance from a tire center line and a circumferential groove having a small distance from the tire center line, and that the circumferential groove having a large distance from the center line is the circumferential groove with which the lateral groove connects.

It is considered that a reaction force from the grounding center of the tire becomes easy to be generated when the above-described lateral groove connects with the circumferential groove having a large distance from the tire center line.

<Definition>

"Tire weight" is expressed in WT (kg). However, WT is a weight of a single tire not including a weight of a rim.

The "standardized rim" is a rim defined for each tire, in a standard system including a standard on which the tire is based, by the standard. For example, the standardized rim refers to a standard rim in an applicable size described in "JATMA YEAR BOOK" in JATTA (The Japan Automobile Tyre Manufacturers Association, Inc.), "Measuring Rim" described in "STANDARDS MANUAL" in ETRTO (The European Tire and Rim Technical Organization), or "Design Rim" described in "YEAR BOOK" in TRA (The Tire and Rim Association, Inc.). In addition, in the case of tires that are not defined by the standard, the "standardized rim" refers to a rim that can be rim-assembled and maintain an internal pressure, that is, one that has the smallest rim diameter and secondly has the narrowest rim width, among rims that do not cause air leakage between the rim and the tire.

A "standardized internal pressure" is an air pressure defined for each tire, in a standard system including a standard on which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. In the case of the tires that are not defined by the standard, the standardized internal pressure is defined as 250 kPa.

The "standardized state" is a state where the tire is rim-assembled on a standardized rim and a standardized internal pressure is filled, and no load is applied. In the present specification, a dimension of each part of a tire (a tire cross-sectional width Lt, etc.) is measured in the above-described standardized state, unless otherwise specified.

The "maximum load capacity ($W_L$) (kg)" is determined by the following equation (1) and (2) when a tire cross-sectional width measured in the standardized state is defined as Lt (mm), a tire cross-sectional height is defined as Ht (mm), and a tire outer diameter is defined as Dt (mm). The above-described tire cross-sectional width Lt is a maximum width between outer surfaces of sidewalls excluding, if any, patterns or characters on the side surface of the tire in the standardized state. The above-described tire cross-sectional height Ht is a distance from the bottom surface of a bead part to the outermost surface of a tread, which is half a difference between the outer diameter of the tire and a nominal size of a rim.

$$V = \{(Dt/2)^2 - (Dt/2-Ht)^2\} \times \pi \times Lt \quad (1)$$

$$W_L = 0.000011 \times V + 100 \quad (2)$$

The "tread end Ti, To" is an outermost grounding position when the maximum load capacity is applied to a tire in the standardized state and the tire is grounded on a flat surface at a camber angle of 0 degree. The tread end Ti represents a tread end located inside a vehicle when mounted on the vehicle, and the tread end To represents a tread end located outside the vehicle.

The "tread width TW" is a distance in a tire width direction W (a left-right direction in FIGS. 1 to 3) between the tread end To and the tread end Ti.

The "land part" refers to a region partitioned by a circumferential groove extending continuously in a tire circumferential direction between the tread end To and the tread end Ti in the tread part. For example, when there are two circumferential grooves, the land part is divided into a pair of shoulder land parts and a center land part sandwiched therebetween, and when there are three circumferential grooves, the center land part is further divided into a land part located inside a vehicle and a land part located outside the vehicle when the tire being mounted on the vehicle.

The "lateral groove area ratio (R) (%) of the land part" can be calculated from a grounding shape of a tire obtained by mounting the tire on the standardized rim, and maintaining the standardized internal pressure (maximum internal pressure), followed by applying an ink to a tread part, applying an load with the maximum load capacity to press the tread part vertically against paper or the like, and transferring the ink applied to the tread part. That is, the lateral groove area ratio (R) of the land part is a ratio (%) of a lateral groove area to a land part area obtained from a contour of the land part in a grounding shape (the land part area including a lateral groove part). The above-described calculation method for the lateral groove area ratio (R) can be similarly applied in both cases for one target land part and a plurality of target land parts.

The "acetone extraction (AE)" means that a rubber composition is immersed in acetone for 72 hours to extract a soluble component in accordance with JIS K 6229. A sample provided to AE is a vulcanized rubber composition. When the sample is cut out from a tire for production, it is cut out from a tread part of the tire.

The "total styrene amount (S) in the rubber component" is a total content (% by mass) of styrene parts comprised in 100% by mass of the rubber component and is calculated by Σ (styrene content of each styrene-containing rubber (% by mass)) × content in rubber component of each styrene-containing rubber (% by mass)/100). For example, when the rubber component is composed of 30% by mass of a first SBR (25% by mass of styrene content), 60% by mass of a second SBR (27.5% by mass of styrene content), and 10% by mass of a BR, a total styrene amount (S) in 100% by mass of the rubber component is 24.0% by mass (= 25 × 30/100 + 27.5 × 60/100). Besides, a styrene amount of a styrene-containing rubber is calculated by $^1$H-NMR measurement.

The "vulcanized rubber particle" is a rubber composition obtained by a step different from that for the rubber matrix of the rubber composition of the present disclosure, which forms a domain that is distinct from the rubber matrix of the rubber composition of the present disclosure by image analysis such as SEM. Generally, it is a recycled rubber, a powdered rubber, etc., which will be described later, but it is not limited thereto, and may be obtained by preparing and pulverizing a rubber composition different from the rubber composition of the present disclosure depending on its intended use. Here, the "recycled rubber" is one obtained by recycling a used rubber of automobile tires, tubes, and other rubber products specified in JIS K 6313: 2012, etc. or one having the equivalent properties therewith. Besides, powdery ones are excluded. In addition, the recycled rubber is desulfurized. The "powdered rubber" is a vulcanized powdered rubber obtained by recycling a waste rubber product. As a waste rubber used for a raw material of the powdered rubber, it is preferable to use a crushed tread rubber of a used tire, spews and burrs from reaping, etc. (crushed products of waste tires), from the viewpoints of environmental consideration and cost.

A "SP value of the aromatic ring-containing resin" means a solubility parameter calculated by the Hoy method

based on a structure of a compound, and the smaller the difference between SP values of two components is, the better the compatibility becomes. The Hoy method is a calculation method described in, for example, K.K.L.Hoy "Table of Solubility Parameters", Solvent and Coatings Materials Research and Development Department, Union Carbites Corp. (1985).

An "oil content" also includes an amount of oil contained in the oil-extended rubber.

Besides, in the present specification, a numerical range identified with "to" means to include the numerical values of both ends, unless otherwise specified.

<Measuring method>

"Tg of a rubber composition" is determined as a temperature corresponding to a largest tan δ value (tan δ peak temperature) in a temperature distribution curve of tan δ obtained by measurement, under a condition of a frequency of 10 Hz, an initial strain of 10%, an amplitude of ± 0.5%, and a temperature rising rate at 2°C/min, using GABO EPLEXOR (Registered Trademark) series. A sample for Tg measurement is a vulcanized rubber composition with 20 mm in length × 4 mm in width × 1 mm in thickness. When it is cut out from a tire for production, it is cut out from a tread part of the tire, and a length direction is a tire circumferential direction.

"0°C tan δ" is a loss tangent measured under a condition of a temperature at 0°C, a frequency of 10 Hz, an initial strain of 10%, a dynamic strain of 2.5%, and an extension mode. A sample for loss tangent measurement is a vulcanized rubber composition with 20 mm in length × 4 mm in width × 1 mm in thickness. When it is cut out from a tire for production, it is cut out from a tread part of the tire.

"30°C tan δ" is a loss tangent measured under a condition of a temperature at 30°C, a frequency of 10 Hz, an initial strain of 5%, a dynamic strain of 1%, and an extension mode. The sample for loss tangent measurement is prepared in the similar manner as in the case of 0°C tan δ.

The "rubber hardness" is a hardness measured using a type A durometer in accordance with JIS K 6253 under a predetermined temperature (-10°C or 25°C). A sample for measuring a rubber hardness is prepared by being cut out from a tread part forming a grounding surface of a tire so that a tire radial direction becomes a thickness direction. Moreover, the measurement is performed by pressing a measuring instrument against the sample from the grounding surface side of the sample for hardness measurement.

A "styrene content" is calculated by $^{1}$H-NMR measurement. For example, it is applied for a styrene-containing rubber such as a SBR.

A "vinyl content (1,2-bond butadiene unit amount)" is measured by infrared absorption spectrometry. For example, it is applied for a SBR.

A "cis 1,4 bond content" is a value calculated by infrared absorption spectrometry. For example, it is applied for a BR.

A "weight-average molecular weight" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, an aromatic ring-containing resin, and the like.

"$N_2$SA of carbon black" is measured according to JIS K 6217-2: "Carbon black for rubber industry-Fundamental characteristics-Part 2: Determination of specific surface area-Nitrogen adsorption methods-Single-point procedures".

"$N_2$SA of silica" is measured by the BET method according to ASTM D3037-93.

A "ratio of a content of a natural rubber in a rubber component" is a value calculated by pyrolysis gas chromatography (PyGC). For example, it is applied for a recycled rubber, a powdered rubber, and the like.

An "average particle size of a powdered rubber" is an average particle size on a mass basis calculated from a particle size distribution measured in accordance with JIS Z 8815: 1994.

A "softening point" is a temperature at which a sphere drops when the softening point specified in JIS K 6220-1: 2001 is measured with a ring and ball softening point measuring device.

<Tire>

The tire of the present invention will be described as follows.

(Tread part)

The tread part has a tread end To placed outside a vehicle and a tread end Ti placed inside the vehicle when mounted on the vehicle, and has one or more circumferential grooves extending continuously in a tire circumferential direction and two or more land parts partitioned by the circumferential grooves between the tread end To and the tread end Ti, the land part having a plurality of lateral grooves extending in a tire width direction.

<<Circumferential groove, land part>>

The circumferential groove may extend linearly or may extend in a zigzag shape. Moreover, the number of circumferential grooves may be one or more, but if there are two or more circumferential grooves, the land part is divided into at least a pair of shoulder land parts and a center land part sandwiched therebetween, and if there are three or more circumferential grooves, the center land part is further divided into at least a land part located inside a vehicle and a land part located outside the vehicle when mounted on the vehicle. Accordingly, a tread pattern of each land part can be made different, which is preferable because a degree of freedom in designing the tread pattern is improved. When the number of circumferential grooves is three or more, the pair of circumferential grooves located on the outermost side in the tire width direction are referred to as outermost circumferential grooves. The number of circumferential grooves may be four or more, or five or more.

When the number of circumferential grooves is three or more, a pair of circumferential grooves located at the outermost end in the tire width direction are referred to as outermost circumferential grooves, and circumferential grooves other than the above-described outermost circumferential grooves are referred to as center circumferential grooves. Of the pair of outermost circumferential grooves, at least one outermost circumferential groove preferably has a groove width narrower than that of at least one of the center circumferential grooves, as mentioned above. Moreover, it is more preferable that both groove widths of the pair of outermost circumferential grooves are narrower than the groove widths of the center circumferential grooves.

When the number of circumferential grooves is five or more, it is preferable that, of the three or more center circumferential grooves, the center circumferential groove in the middle has a groove width wider than those of the other center circumferential grooves on the both sides. With such configuration, a pressure outside in a tire width direction tends to inevitably increase in a tread part of the tire when turning, and therefore, by adjusting a groove width as described above, a reaction force on a shoulder land part can be increased, and steering stability on a snowy road surface tends to be easily improved.

<<Lateral groove of land part>>

The land part has a plurality of lateral grooves extending in a tire width direction. A width of the lateral groove is, but not particularly limited to, usually 8 mm or less. Among the lateral grooves, those having a width of 2 mm or less are particularly referred to as sipes. A direction of the lateral groove may have a predetermined angle ($\theta$) with respect to a tire width direction W. A range of $\theta$ is, for example, 0° to $\pm$ 80°. In one lateral groove, $\theta$ may be constant at an arbitrary position in the tire width direction, or $\theta$ may change according to displacement of a position in the tire width direction.

The lateral groove preferably has one end that does not connect with a circumferential groove from the viewpoint of increasing a pattern rigidity. For example, it is preferable that the lateral groove reaches the tread grounding end at one end thereof, and does not reach the outermost circumferential groove at the other end thereof but stays in the land part, in at least one shoulder land part of the pair of shoulder land parts, preferably in both shoulder land parts. Moreover, it is preferable that the lateral groove connects with one of the two circumferential grooves partitioning the center land part at one end thereof, and does not reach the other circumferential groove at the other end thereof but stays in the land part, in at least one center land part. Moreover, when the two circumferential grooves partitioning the center land part consist of a circumferential groove having a large distance from a tire center line and a circumferential groove having a small distance from the tire center line, the circumferential groove with which the lateral groove connects is preferably a circumferential groove having a large distance from the center line.

All lateral grooves may connect with all adjacent circumferential grooves, but it is preferable that some of the lateral grooves are the above-described lateral grooves having one end that does not connect with adjacent circumferential grooves, and it is more preferable that all lateral grooves are the above-described lateral grooves having one end that does not connect with adjacent circumferential grooves.

<<Lateral groove area ratio of land part (condition (1))>>

In the present invention, the groove area ratio (R) is 10% to 40% in at least one land part. When R is less than 10%, a sufficient steering stability on snow cannot be obtained. On the other hand, when R is more than 40%, a pattern rigidity of a tread is lowered, and steering stability on a dry road surface is lowered.

A land part where R is within the above-described ranges may be at least one land part of the land parts of the tire of the present invention, preferably a land part closer to the tire center line from the viewpoint of the effects of the present invention. Moreover, the land parts where R is within the above-described ranges may be a plurality of land parts, or may be all land parts. For example, when there are three circumferential grooves, it is preferable that R is within the above-described ranges in center land parts rather than in shoulder land parts, and that R is within the above-described ranges in a center land part closer to the tire center line, among the center land parts. Moreover, the land part where R is within the above-described ranges may be a shoulder land part.

From the viewpoint of the effects of the present invention, the range of R is preferably 12% or more, more preferably 14% or more, further preferably 15% or more, while it is preferably 37% or less, more preferably 33% or less, further preferably 30% or less.

The lateral groove area ratio can be adjusted with appropriate control by a conventional method, for example, it can be adjusted with appropriate control of the shape, width, length, direction, number, etc. of the lateral grooves.

<<Tread pattern>>

The tread pattern of the tire of the present invention is not particularly limited as long as it follows the description above. The tread pattern of the tire of the present invention will be described with reference to the drawings as follows, but the drawings are merely for explaining the embodiments, and the contents of the present invention are not limited by these drawings at all.

FIG. 1 is a development view of a tread part showing one embodiment of the present invention. W represents a tire width direction. TW represents a distance in the tire width direction W between an inner tread end Ti and an outer tread end To. The tread part has five circumferential grooves 10 in linear shapes (three center circumferential grooves 11 and two outermost circumferential grooves 12). The widest center circumferential groove 11 passes over the tire center line CL, a pair of center circumferential grooves 11 whose width is slightly narrow pass outside the widest center circumferential groove 11, and a pair of outermost circumferential grooves 12 whose width is narrow pass further outside the pair of center circumferential grooves 11. In a shoulder land part 30, lateral grooves 20 of the shoulder land part 30 reach the tread grounding end Ti or To at one end thereof and reach the outermost circumferential groove at the other end thereof. In a pair of center land parts 40 in contact with the center circumferential groove 11 that passes through the tire center line CL, lateral grooves (sipe) 21 of the pair of center land parts 40 connect with two center circumferential grooves 11 partitioning the each center land part at both ends, respectively. No lateral groove is formed on a pair of center land parts 41 located further outside the center land parts.

FIG. 2 is a development view of a tread part showing one embodiment of the present invention. FIG. 2 differs from FIG. 1 in that, in the pair of shoulder land parts 30, the lateral grooves 20 reach the tread grounding end at one end thereof, but do not reach the outermost circumferential groove at the other end thereof.

FIG. 3 is a development view of a tread part showing one embodiment of the present invention. FIG. 3 differs from FIG. 1 in that, in the pair of shoulder land parts 30, the lateral grooves 20 reach the tread grounding end at one end thereof, but do not reach the outermost circumferential groove at the other end thereof, and further, in the pair of center land parts 40 partitioned by the center circumferential groove 11, the lateral grooves (sipe) 21 reach a center circumferential groove 11 having a large distance from the tire center line CL of two center circumferential grooves 11 partitioning each center land part at one end thereof, but do not reach a center circumferential groove 11 passing through the tire center line at the other end thereof and stay in the land part.

<<Glass transition temperature>>

In the rubber composition of the tread part, a glass transition temperature (Tg) is within a range of -40°C to -15°C. When the Tg is less than -40°C or more than -15°C, heat generation cannot be sufficiently increased in a low temperature environment. The Tg is preferably -38°C or higher, more preferably -35°C or higher. On the other hand, the Tg is preferably -17°C or lower, more preferably -20°C or lower. The Tg of the rubber composition is measured by the above-described measuring method.

The Tg of the rubber composition can be adjusted by a conventional method in the tire industry, specifically it can be adjusted by changing types or amounts of chemicals (for example, a rubber component, a filler, a softening agent, sulfur, a vulcanization accelerator, a silane coupling agent, etc.) compounded in the rubber composition. For example, the Tg can be increased by increasing a content of resin such as an aromatic ring-containing resin, and conversely, it can be decreased by decreasing the content. Therefore, a person skilled in the art can adjust Tg as appropriate.

<<Total styrene amount>>

In the rubber composition of the tread part, a total styrene amount (S) in the rubber component is less than 20.0% by mass. When S is not less than 20.0% by mass, aggregation with a styrene part in a rubber matrix (sulfur-crosslinked rubber component) cannot be suppressed, and it becomes difficult to obtain followability to a road surface. A value of S is preferably 19.5% by mass or less, more preferably 19.0% by mass or less, further preferably 18.5% by mass or less. A lower limit of S is not particularly limited, and it is preferable as low as possible from the viewpoint of

suppressing aggregation with the styrene part, but usually, it is preferably 13% by mass or more, more preferably 14% by mass or more, further preferably 15% by mass or more.

(Weight and maximum load capacity of tire (condition (2))

In the tire of the present invention, the weight (WT) (kg) and the maximum load capacity ($W_L$) (kg) of the tire satisfy the following condition (2):

$$(2)\ WT/W_L \leq 0.015$$

That is, the tire of the present invention is a tire whose weight (WT) with respect to the maximum load capacity ($W_L$) of the tire is equal to or less than a predetermined value. Generally, as the maximum load capacity increases, a weight of a member such as a rubber becomes heavier, so that the tire weight tends to increase. However, the tire of the present invention is a tire whose weight with respect to the maximum load capacity is reduced as compared with the conventional tire. Therefore, fuel efficiency is excellent accordingly. The $WT/W_L$ is preferably 0.014 or less, more preferably 0.013 or less. On the other hand, a lower limit of the $WT/W_L$ is not particularly limited from the viewpoint of fuel efficiency, but may, for example, be 0.010 or more.

(Change in Tg of rubber composition before and after extraction with acetone)

In the tires of the present invention, the change in Tg of the rubber composition, before and after the rubber composition being immersed in acetone for 72 hours to extract a soluble component in accordance with JIS K 6229, is preferably 15°C or greater. Because of this, as described above, it is considered that heat generation can be enhanced without impairing followability even in a low temperature environment. The change in Tg is preferably 16°C or greater, more preferably 17°C or greater, further preferably 18°C or greater. An upper limit of the change in Tg is not particularly limited, but may be, for example, 25°C or lower, or 23°C or lower. Besides, acetone extraction is performed by the above-described method.

(Total styrene amount and tire weight (condition (3))

The total styrene amount (S) and the tire weight (WT) satisfy the following condition (3):

$$(3)\ S/WT \leq 3.0$$

Because of this, as described above, even if the tire weight is reduced, it is considered that steering stability in a low temperature environment becomes easy to be improved. The S/WT is preferably 2.9 or less, more preferably 2.8 or less, further preferably 2.7 or less. On the other hand, a lower limit of the S/WT is not particularly limited from the viewpoint of steering stability, but is usually 1.8 or more, preferably 1.9 or more, more preferably 2.0 or more.

(0°C tan δ and 30°C tan δ (condition (4))

The rubber composition of the tread part preferably satisfies the following condition (4):

$$(4)\ 0°C\ \tan\delta / 30°C\ \tan\delta > 2.0$$

(0°C tan δ represents a loss tangent measured under a condition of a temperature at 0°C, a frequency of 10 Hz, an initial strain of 10%, and a dynamic strain of 2.5%, and 30°C tan δ represents a loss tangent measured under a condition of a temperature at 30°C, a frequency of 10 Hz, an initial strain of 5%, and a dynamic strain of 1%.)

Because of this, as described above, it is considered that a sufficient heat generation can be secured even at a low temperature and followability to a road surface can be obtained. The 0°C tan δ/30°C tan δ is preferably 2.1 or more, more preferably 2.2 or more, further preferably 2.3 or more. On the other hand, an upper limit of the 0°C tan δ/30°C tan δ is not particularly limited from the viewpoint of heat generation, but is usually 2.7 or less, preferably 2.5 or less, more preferably 2.4 or less.

A value of the 0°C tan δ and a value of the 30°C tan δ can be adjusted by a conventional method in the tire industry, specifically it can be adjusted by changing types or amounts of chemicals (for example, a rubber component,

a filler, a softening agent, sulfur, a vulcanization accelerator, a silane coupling agent, etc.) compounded in the rubber composition. For example, by reducing a content of silica or an aromatic ring-containing resin, the value of the 0°C tan δ and the value of the 30°C tan δ can be reduced, and conversely, by increasing the content, the value of the 0°C tan δ and the value of the 30°C tan δ can be increased. Therefore, a person skilled in the art can appropriately adjust the value of the 0°C tan δ and the value of the 30°C tan δ according to a target 0°C tan δ/30°C tan δ.

(Rubber hardness at -10°C and rubber hardness at 25°C)

A difference between a rubber hardness at -10°C and a rubber hardness at 25°C of the rubber composition of the tread part is preferably 3 to 18. Because of this, as described above, it is considered that deterioration of steering stability in a low temperature environment can be suppressed. The difference in hardness is preferably 4 or more, more preferably 5 or more, further preferably 6 or more. On the other hand, the difference in hardness is preferably 17 or less, more preferably 16 or less, further preferably 15 or less. A rubber hardness is measured by the above-described measuring method.

The rubber hardness of the rubber composition can be adjusted by a conventional method in the tire industry, specifically it can be adjusted by changing types or amounts of chemicals (for example, a rubber component, a filler, a softening agent, sulfur, a vulcanization accelerator, a silane coupling agent, etc.) compounded in the rubber composition. For example, the rubber hardness can be decreased by increasing a content of oil, and conversely, it can be increased by decreasing the content. Therefore, a person skilled in the art can adjust the rubber hardness as appropriate.

[Rubber composition]

For the rubber composition of the tread part of the tire of the present invention, components to be compounded in the rubber composition will be described below.

(Rubber component)

The rubber composition preferably comprises at least one selected from the group consisting of an isoprene-based rubber, a styrene-butadiene rubber (SBR), and a butadiene rubber (BR) as a rubber component, more preferably comprises a SBR, further preferably comprises a SBR and a BR, and may comprises a rubber component consisting only of a SBR and a BR.

«SBR»

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

Examples of the S-SBR that can be used in the present disclosure include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more from the viewpoints of wet grip performance and abrasion resistance. Moreover, it is preferably 60% by mass or less from the viewpoints of temperature dependence of grip performance and blow resistance, and it is preferably 35% by mass or less, more preferably 30% by mass or less from the viewpoint of the effects of the present invention. The styrene content of the SBR is measured by the above-described measuring method.

A vinyl content of the SBR is preferably 10 mol% or more, more preferably 15 mol% or more, further preferably 20 mol% or more from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less from the viewpoints of prevention of increase in temperature dependence, elongation at break, and abrasion resistance. The vinyl content of the SBR is measured by the above-described measuring method.

A weight-average molecular weight (Mw) of the SBR is preferably 200,000 or more, more preferably 250,000 or more from the viewpoint of wet grip performance. Moreover, the weight-average molecular weight is preferably 2,000,000 or less, more preferably 1,800,000 or less, further preferably 1,500,000 or less from the viewpoint of cross-linking uniformity. The Mw of the SBR is measured by the above-described measuring method.

A content of the SBR when compounded in 100% by mass of the rubber component is preferably 30% by mass or more, more preferably 50% by mass or more, further preferably 60% by mass or more from the viewpoint of the effects of the present invention. Moreover, the content of the SBR may be 100% by mass, or is preferably 95% by mass or less, more preferably 90% by mass or less, further preferably 80% by mass or less.

«BR»

A BR is not particularly limited, and those common in the tire industry can be used such as, for example, a BR having a cis 1,4 bond content (cis content) of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BR may be used alone, or two or more thereof may be used in combination. The cis 1,4 bond content of the BR is measured by the above-described measuring method.

Examples of modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like. Examples of such modified BRs include, for example, a tin-modified BR and a modified BR for silica manufactured and sold by ZS Elastomer Co., Ltd., etc.

A weight-average molecular weight (Mw) of the BR is preferably 300,000 or more, more preferably 350,000 or more, further preferably 400,000 or more from the viewpoint of abrasion resistance. Moreover, it is preferably 2,000,000 or less, more preferably 1,000,000 or less from the viewpoint of cross-linking uniformity. The Mw of the BR is measured by the above-described measuring method.

A content of the BR when compounded in 100% by mass of the rubber component is preferably 3% by mass or more, more preferably 5% by mass or more, further preferably 10% by mass or more from the viewpoint of the effects of the present invention. Moreover, the content of the BR is preferably 40% by mass or less, more preferably 20% by mass or less, further preferably 15% by mass or less.

<<Isoprene-based rubber>>

As an isoprene-based rubber, for example, those common in the tire industry can be used, such as an isoprene rubber (IR) and a natural rubber. Examples of the natural rubber includes a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber when compounded in 100% by mass of the rubber component is preferably 30% by mass or less, more preferably 20% by mass or less, further preferably 10% by mass or less from the viewpoint of the effects of the present invention. Moreover, a lower limit value of the content of the isoprene-based rubber when compounded is not particularly limited and may be 0% by mass.

<<Other rubber components>>

As the rubber components according to the present invention, rubber components other than the above-described isoprene-based rubbers, SBRs, and BRs may be included. As other rubber components, cross-linkable rubber components commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Contents of other rubbers in the rubber component may be 0% by mass.

(Filler)

The rubber composition according to the present invention preferably comprises silica, more preferably comprises carbon black and silica, or preferably consists of carbon black and silica, as a filler.

<<Carbon black, silica>>

As carbon black, those commonly used in the tire industry can be appropriately utilized, examples of which include N134, N110, N220, N234, N219, N339, N330, N326, N351, N550, N762, and the like. These carbon black may be used alone, or two or more thereof may be used in combination.
A nitrogen adsorption specific surface area ($N_2SA$) of carbon black is preferably 80 $m^2/g$ or more, more preferably 90 $m^2/g$ or more, further preferably 100 $m^2/g$ or more from the viewpoint of reinforcing property. Moreover, the $N_2SA$ is preferably 200 $m^2/g$ or less, more preferably 170 $m^2/g$ or less, further preferably 155 $m^2/g$ or less from the viewpoints of fuel efficiency and processability. The $N_2SA$ of carbon black is measured by the above-described measuring method.
A content of carbon black when compounded based on 100 parts by mass of the rubber component is preferably 1 part by mass or more, more preferably 3 parts by mass or more, further preferably 5 parts by mass or more from the viewpoints of abrasion resistance and wet grip performance. Moreover, it is preferably 50 parts by mass or less, more preferably 30 parts by mass or less, further preferably 20 parts by mass or less, particularly preferably 10 parts by mass or less from the viewpoint of fuel efficiency.
Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.
A nitrogen adsorption specific surface area ($N_2SA$) of silica is preferably 140 $m^2/g$ or more, further preferably 170 $m^2/g$ or more from the viewpoints of fuel efficiency and abrasion resistance. Moreover, it is preferably 350 $m^2/g$ or less, more preferably 300 $m^2/g$ or less, further preferably 250 $m^2/g$ or less from the viewpoints of fuel efficiency and processability. The $N_2SA$ of silica is measured by the above-described measuring method.
A content of silica when compounded based on 100 parts by mass of the rubber component is preferably 20 parts by mass or more, more preferably 40 parts by mass or more, further preferably 50 parts by mass or more, particularly preferably 60 parts by mass or more from the viewpoint of wet grip performance. Moreover, it is preferably 180 parts by mass or less, more preferably 150 parts by mass or less, further preferably 120 parts by mass or less from the viewpoint of abrasion resistance.
A total content of silica and carbon black when compounded based on 100 parts by mass of the rubber component is preferably 40 parts by mass or more, more preferably 50 parts by mass or more, further preferably 60 parts by mass or more from the viewpoint of abrasion resistance. Moreover, it is preferably 200 parts by mass or less, more preferably 170 parts by mass or less, further preferably 150 parts by mass or less, further preferably 120 parts by mass or less from the viewpoints of fuel efficiency and elongation at break.
A ratio of a content of silica to a total content of silica and carbon black is preferably 60% by mass or more, more preferably 70% by mass or more, further preferably 80% by mass or more, particularly preferably 85% by mass or more.

<<Other fillers>>

As fillers other than silica and carbon black, those commonly used in the tire industry can be compounded, such as aluminum hydroxide, calcium carbonate, alumina, clay, and talc. Moreover, a vulcanized rubber particle can be compounded. Examples of the vulcanized rubber particle include a recycled rubber, a powdered rubber, and the like. The vulcanized rubber particle can be used alone, or two or more thereof can be used in combination.

<<Recycled rubber, powdered rubber>>

A rubber composition comprising a recycled rubber or a powdered rubber usually has a problem that elongation at break, etc. easily deteriorate. However, when the rubber component comprises a rubber comprising a styrene part (a styrene-butadiene rubber, etc.) and an aromatic ring-containing resin, the rubber comprising the styrene part is compatible with the aromatic ring-containing resin, and therefore, it is considered that, due to the effect of the compatibility between the rubber comprising the styrene part and the aromatic ring-containing resin, a problem of deterioration in elongation at break, etc. is unlikely to occur even if the recycled rubber or powdered rubber is compounded. As at least one selected from the recycled rubber and the powdered rubber, only the recycled rubber may be used, only the powdered rubber may be used, or the recycled rubber and the powdered rubber may be used in combination, but it is preferable that only the recycled rubber is used.
A type of the recycled rubber may be any of a tube recycled rubber, a tire recycled rubber, and other recycled rubbers, and a plurality of these types may be combined. Among them, a tire recycled rubber is preferable.
As the recycled rubber, those obtained by a known producing method can be used, and, for example, the most common pan method (oil method), as well as a method with a Banbury mixer/twin-screw reaction extruder, a microwave

method, an ultrasonic method, an ultrasonic wave method, an electron beam irradiation method, and the like have been developed, but those produced by any method may be used. Moreover, commercially available recycled rubbers may be used. One of specific examples for producing a recycled rubber is a method of charging a vulcanized rubber powder into a closed type mixer or extruder, heating it to 100 to 250°C, treating it for 5 to 50 minutes while applying a mechanical shearing force to desulfurize it for recycling. As commercially available products, for example, those manufactured and sold by Muraoka Rubber Reclaiming Co., Ltd., ASAHI SAISEIGOMU Co., Ltd., etc. can be used.

The rubber component in the recycled rubber has a content ratio of a natural rubber of preferably 40% by mass or more, more preferably 50% by mass or more, further preferably 70% by mass or more. When the ratio of a content of a natural rubber is within the above-described ranges, an excellent elongation at break tends to be obtained. The ratio of a content of a natural rubber is measured by the above-described measuring method.

The recycled rubber can be used alone, or two or more thereof can be used in combination.

A content of the recycled rubber when compounded based on 100 parts by mass of the diene-based rubber component is preferably 1 part by mass or more, more preferably 5 parts by mass or more, further preferably 10 parts by mass or more from the viewpoint of consideration for the environment. Moreover, the content is preferably 30 parts by mass or less, more preferably 20 parts by mass or less, further preferably 15 parts by mass or less from the viewpoint that the effects of the present invention are easily exhibited.

The powdered rubber is a vulcanized powdered rubber obtained by recycling a waste rubber product, but as a waste rubber used as a raw material of the powdered rubber, a rubber type of the waste rubber is not particularly limited, examples of which include diene-based rubbers such as a NR, a SBR, a BR, and an IR. Besides, as the powdered rubber, a 30-mesh pass product or a 40-mesh pass product in Tyler mesh can be used. The powdered rubber can be used alone, or two or more thereof can be used in combination.

An average particle size of the powdered rubber is preferably 70 $\mu$m or more, more preferably 100 $\mu$m or more. The average particle size is preferably 1 mm or less, more preferably 750 $\mu$m or less. The average particle size of the powdered rubber is measured by the above-described measuring method.

The rubber component in the powdered rubber has a content ratio of a natural rubber of preferably 40% by mass or more, more preferably 50% by mass or more, further preferably 60% by mass or more. When the ratio of a content of a natural rubber is within the above-described ranges, an excellent elongation at break tends to be obtained. The ratio of a content of a natural rubber is measured by the above-described measuring method.

As powdered rubbers, for example, those manufactured and sold by Muraoka Rubber Reclaiming Co., Ltd., ASAHI SAISEIGOMU Co., Ltd., Lehigh Technologies, etc. can be used. The powdered rubber can be used alone, or two or more thereof can be used in combination.

A content of the powdered rubber when compounded based on 100 parts by mass of the diene-based rubber component is preferably 1 part by mass or more, more preferably 5 parts by mass or more, further preferably 10 parts by mass or more from the viewpoint of consideration for the environment. Moreover, the content is preferably 30 parts by mass or less, more preferably 20 parts by mass or less, further preferably 15 parts by mass or less from the viewpoint that the effects of the present invention are easily exhibited.

A content of the vulcanized rubber particle is preferably 5 parts by mass or more, more preferably 10 parts by mass or more, further preferably 15 parts by mass or more based on 100 parts by mass of the diene-based rubber component from the viewpoint of consideration for the environment. Moreover, the content is preferably 50 parts by mass or less, more preferably 40 parts by mass or less, further preferably 30 parts by mass or less from the viewpoint that the effects of the present invention are easily exhibited.

(Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and mercapto-based silane coupling agents are preferable. These silane coupling agents may be used alone, or two or more thereof may be used in combination.

It is preferable that the mercapto-based silane coupling agent is a compound represented by the following formula (7) and/or a compound comprising a bond unit A represented by the following formula (8) and a bond unit B represented by the following formula (9).

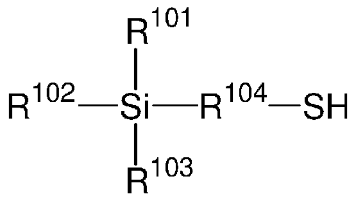

(7)

(wherein, $R^{101}$, $R^{102}$, and $R^{103}$ each independently represents a group represented by an alkyl having 1 to 12 carbon atoms, an alkoxy having 1 to 12 carbon atoms, or $-O-(R^{111}-O)_z-R^{112}$ ($R^{111}$s of z pieces each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

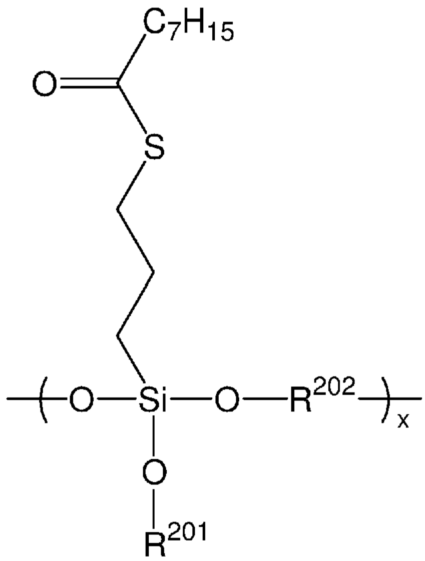

(8)

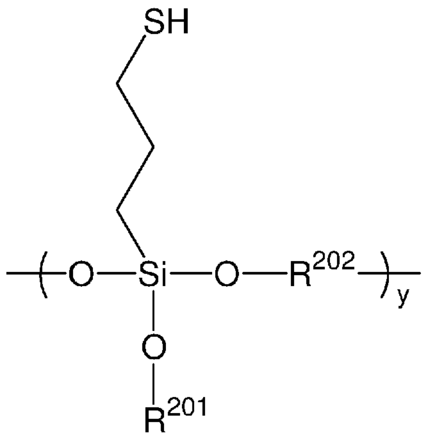

(9)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms, or an alkynyl having 2 to 30 carbon atoms, each of the alkyl, the alkenyl and the alkynyl optionally being substituted with a halogen atom, hydroxyl, or carboxyl; and $R^{202}$ represents an alkylene having 1 to 30 carbon atoms, an alkenylene having 2 to 30 carbon atoms, or an alkynylene having 2 to 30 carbon atoms; and $R^{201}$ and $R^{202}$ may together form a ring structure.)

Examples of the compound represented by the formula (7) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (10) (Si363 manufactured by Evonik Degussa GmbH), and the like. Among them, the compound represented by the following chemical formula (10) can be appropriately used. They may be used alone, or two or more thereof may be used in combination.

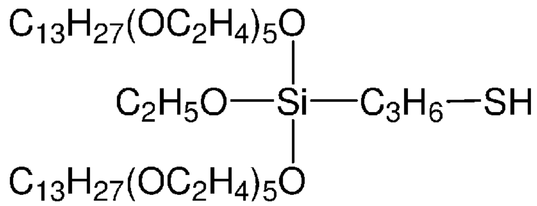

(10)

Examples of the compound comprising the bond unit A represented by the formula (8) and the bond unit B represented by the formula (9) include, for example, those manufactured and sold by Momentive Performance Materials, etc. They may be used alone, or two or more thereof may be used in combination.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more from the viewpoint of enhancing dispersibility of silica. Moreover, it is preferably 20 parts by mass or less, more preferably 15 parts by mass or less, further preferably 12 parts by mass or less from the viewpoints of cost and processability.

As a filler, other fillers may be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone, or two or more thereof may be used in combination.

(Aromatic ring-containing resin)

In the present disclosure, the "aromatic ring-containing resin" means resin containing an aromatic ring in its structure. Specifically, the aromatic ring-containing resin is a homopolymer or copolymer of a monomer comprising an aromatic ring-containing monomer, and is preferably an aromatic ring-containing resin in which the aromatic ring-containing monomer has at least one hydroxyl group. The aromatic ring-containing resin is a resin used in this field and is not particularly limited as long as it is a resin containing an aromatic ring. Examples of such resin include, for example, a C9-based petroleum resin, a C5-C9-based petroleum resin, an alkylphenol resin, a coumarone-based resin, an aromatic-modified terpene resin, a terpene phenol resin, and the like. Among them, the aromatic ring-containing resin preferably comprises at least one of a C9-based petroleum resin and a terpene phenol resin and further preferably consists of at least one of a C9-based petroleum resin and a terpene phenol resin, from the reason that its compatibility with a SBR is more excellent. The aromatic ring-containing resin may be only a C9-based petroleum resin or only a terpene phenol resin. Moreover, as the resin in which the aromatic ring-containing monomer has at least one hydroxyl group, at least one of an alkylphenol resin and a terpene phenol resin is preferable, and a terpene phenol resin is more preferable. The aromatic ring-containing resin can be used alone, or two or more thereof can be used in combination.

<<C9-based petroleum resin>>

Examples of the C9-based petroleum resin include resin obtained by cationically polymerizing a monomer such as styrene, vinyltoluene, alkylstyrene, and indene which are petroleum fractions (C9 fractions) corresponding to 8 to 10 carbon atoms. As the C9-based petroleum resin, for example, those manufactured and sold by ENEOS Corporation and the like can be used. Moreover, specific examples of the C9-based petroleum resin include a styrene-based resin. The styrene-based resin is not particularly limited, but an $\alpha$-methylstyrene-based resin (AMS) is appropriately used. Examples of the $\alpha$-methylstyrene-based resin include a homopolymer of $\alpha$-methylstyrene (poly-$\alpha$-methylstyrene) and a copolymer of $\alpha$-methylstyrene and another compound including an aromatic compound or a phenol-based compound. Examples of another compound that may constitute this copolymer include styrene, methylstyrene, methoxystyrene, divinylbenzene, and the like, and examples of this copolymer include, for example, a copolymer of $\alpha$-methylstyrene and styrene. As the $\alpha$-methylstyrene-based resin, those manufactured by Kraton Corporation are appropriately used.

<<C5-C9-based petroleum resin>>

The C5-C9-based petroleum resin is resin obtained by copolymerizing a C5 fraction and a C9 fraction, which is also referred to as an aliphatic/aromatic copolymer-based petroleum resin. Moreover, resin, in which the above-described petroleum resin is hydrogenated, may be used. Examples of the C5 fraction include, for example, those obtained by thermal decomposition of naphtha, and examples of a component comprised in the C5 fraction include, for example, olefin-based hydrocarbons such as 1-pentene, 2-pentene, 2-methyl-1-butene, 2-methyl-2-butene, and 3-methyl-1-butene, diolefin-based hydrocarbons such as 2-methyl-1,3-butadiene (isoprene), 1,2-pentadiene, 1,3-pentadiene

(piperylene), and 3-methyl-1,2-butadiene, and the like. The C9 fraction is the same as the C9 fraction for the C9-based petroleum resin described above. Examples of the C5-C9-based petroleum resin include, for example, a copolymer comprising indene, styrene, vinyltoluene, isoprene, and piperylene as main components, a copolymer comprising indene, styrene, vinyltoluene, and piperylene as main components, and the like. As the C5-C9-based petroleum resin, for example, those manufactured and sold by LUHUA, Qilong, Tosoh Corporation, etc., and the like can be used.

<<Alkylphenol resin>>

Examples of the alkylphenol resin include an alkylphenol aldehyde condensed resin obtained by reacting alkylphenol with aldehydes such as formaldehyde, acetaldehyde, and furfural with an acid or an alkali catalyst; an alkylphenol alkyne condensed resin obtained by reacting alkylphenol with alkyne such as acetylene; a modified alkylphenol resin obtained by modifying these resin with compounds such as a cashew nut oil, a tall oil, a flaxseed oil, various animal and vegetable oils, an unsaturated fatty acid, rosin, an alkylbenzene resin, aniline, and melamine, and the like. Examples of alkylphenol of the alkylphenol resin include cresol, xylenol, tert-butylphenol, octylphenol, nonylphenol, and the like. As the alkylphenol resin, for example, those manufactured and sold by Taoka Chemical Co., Ltd., etc., and the like can be used.

<<Coumarone-based resin>>

The coumarone-based resin is resin comprising coumarone as a main component, examples of which include, for example, a coumarone resin, a coumarone indene resin, a copolymer resin comprising coumarone, indene, and styrene as main components, and the like. As the coumarone-based resin, for example, those manufactured and sold by Nitto Chemical Co., Ltd., etc., and the like can be used.

<<Aromatic-modified terpene resin>>

The aromatic-modified terpene resin is resin obtained by copolymerizing a terpene compound as a monomer and an aromatic compound. The terpene compound is a polymer of isoprene ($C_5H_8$), having terpene which is classified into monoterpene ($C_{10}H_{16}$), sesquiterpene ($C_{15}H_{24}$), diterpene ($C_{20}H_{32}$), and the like as a basic skeleton. More specifically, examples of the terpene compound include α-pinene, β-pinene, dipentene, limonene, myrcene, aloocimen, ocimene, α-phellandrene, α-terpinene, γ-terpinene, terpinolene, 1,8-cineol, 1,4-cineol, α-terpineol, β-terpineol, γ-terpineol, camphene, tricyclene, sabinene, paramentadienes, carenes, and the like. Examples of the aromatic compound include, for example, styrene, α-methylstyrene, vinyltoluene, divinyltoluene, and the like. As the aromatic-modified terpene resin, for example, those manufactured and sold by Yasuhara Chemical Co., Ltd., etc., and the like can be used.

<<Terpene phenol resin>>

The terpene phenol resin is resin obtained by copolymerizing a terpene compound as a monomer and a phenol-based compound. The terpene phenol resin may or may not be hydrogenated. The terpene compound is the same as the terpene compound for the aromatic-modified terpene resin described above. Examples of the phenol-based compound include, for example, phenol, bisphenol A, cresol, xylenol, and the like. Among them, phenol is preferable. As the terpene phenol resin, for example, those manufactured and sold by Yasuhara Chemical Co., Ltd., etc., and the like can be used.

«Mw of aromatic ring-containing resin»

A weight-average molecular weight (Mw) of the aromatic ring-containing resin is preferably 300 or more, more preferably 400 or more, further preferably 500 or more from the viewpoints of less volatilization and a good grip performance. Moreover, the Mw is preferably 10000 or less, more preferably 2500 or less, more preferably 1500 or less, further preferably 1200 or less. The Mw of the aromatic ring-containing resin is measured by the above-described measuring method.

<<Softening point of aromatic ring-containing resin>>

A softening point of the aromatic ring-containing resin is preferably 160°C or lower, more preferably 145°C or lower, further preferably 130°C or lower. Moreover, the softening point is preferably 20°C or higher, more preferably 35°C or higher, further preferably 50°C or higher. When the softening point of the aromatic ring-containing resin is within the above-described ranges, the effects of the present invention tend to be better exhibited. The softening point of the

aromatic ring-containing resin is measured by the above-described measuring method.

<<SP value of aromatic ring-containing resin>>

A SP value of the aromatic ring-containing resin is preferably 8.00 or more, more preferably 8.50 or more, further preferably 8.80 or more. Moreover, the SP value is preferably 11.00 or less, more preferably 10.00 or less, further preferably 9.50 or less. When the SP value of the aromatic ring-containing resin is within the above-described ranges, its compatibility with a SBR is improved, and a "pseudo-connection of SBR-aromatic ring-containing resin-carbon black" becomes easy to be effectively expressed, and there is a tendency that the effects of the present invention can be better exhibited. The SP value of the aromatic ring-containing resin is measured by the above-described measuring method.

<<Content of aromatic ring-containing resin>>

A content of the aromatic ring-containing resin based on 100 parts by mass of the diene-based rubber component is preferably 0.5 parts by mass or more, more preferably 1.0 part by mass or more, more preferably 1.5 parts by mass or more, further preferably 2.0 parts by mass or more, further preferably 5.0 parts by mass or more from the reason that the "pseudo-connection of SBR-aromatic ring-containing resin-carbon black" is easy to be effectively expressed. Moreover, the content is preferably 30.0 parts by mass or less, more preferably 20.0 parts by mass or less, more preferably 10.0 parts by mass or less. When the content of the aromatic ring-containing resin is within the above-described ranges, the effects of the present invention tend to be better exhibited.

(Other compounding agents)

The rubber composition according to the present invention can appropriately comprise compounding agents conventionally and generally used in the tire industry, for example, a softening agent, wax, processing aid, stearic acid, zinc oxide, an antioxidant, a vulcanizing agent, a vulcanization accelerator, and the like, in addition to the above-described components.

<<Softening agent>>

The rubber composition according to the present invention preferably comprises a softening agent. Examples of the softening agent include, for example, oil, a liquid rubber, an ester-based plasticizing agent, resin other than the above-described aromatic ring-containing resin, and the like. The softening agent may be used alone, or two or more thereof may be used in combination.

Examples of oil include, for example, process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic (PCA) compound can also be used. Examples of the low PCA content process oil include a mild extraction solution (MES), a treated distillate aromatic extract (TDAE), a heavy naphthenic oil, and the like. Oil may be used alone, or two or more thereof may be used in combination.

A content of oil when compounded based on 100 parts by mass of the rubber component is preferably 5 parts by mass or more, more preferably 7 parts by mass or more, further preferably 10 parts by mass or more from the viewpoint of processability. Moreover, it is preferably 40 parts by mass or less, more preferably 30 parts by mass or less, further preferably 20 parts by mass or less from the viewpoint of abrasion resistance.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the liquid rubber is preferably 30 parts by mass or less, more preferably 20 parts by mass or less, further preferably 10 parts by mass or less.

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component is preferably 1 part by mass or more, more preferably 2 parts by mass or more, further preferably 3 parts by mass or more, particularly preferably 5 parts by mass or more. Moreover, the content of the ester-based plasticizing agent is preferably 30 parts by mass or less, more preferably 20 parts by mass or less, further preferably 10 parts by mass or less.

Resin other than the aromatic ring-containing resin is not particularly limited, examples of which include a terpene-based resin, a rosin-based resin, and the like commonly used in the tire industry. Among them, resin may be used alone, or two or more thereof may be used in combination.

A content of the softening agent when compounded based on 100 parts by mass of the rubber component (a total amount of a plurality of softening agents when used in combination) is preferably 5 parts by mass or more, more preferably 10 parts by mass or more, further preferably 15 parts by mass or more from the viewpoint of wet grip performance. Moreover, it is preferably 120 parts by mass or less, more preferably 100 parts by mass or less, further preferably 50 parts by mass or less, further preferably 40 parts by mass or less, further preferably 30 parts by mass or less from the viewpoint of processability.

«Wax»

A content of wax when compounded based on 100 parts by mass of the rubber component is preferably 0.5 parts by mass or more, more preferably 1 part by mass or more from the viewpoint of weather resistance of a rubber. Moreover, it is preferably 10 parts by mass or less, more preferably 5 parts by mass or less from the viewpoint of preventing whitening of a tire due to bloom.

<<Processing aid>>

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1 part by mass or more from the viewpoint of exhibiting an effect of improving processability. Moreover, it is preferably 10 parts by mass or less, more preferably 8 parts by mass or less from the viewpoints of abrasion resistance and breaking strength.

<<Antioxidant>>

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1 part by mass or more from the viewpoint of ozone crack resistance of a rubber. Moreover, it is preferably 10 parts by mass or less, more preferably 5 parts by mass or less from the viewpoints of abrasion resistance and wet grip performance.

<<Stearic acid>>

A content of stearic acid when compounded based on 100 parts by mass of the rubber component is preferably 0.5 parts by mass or more, more preferably 1 part by mass or more from the viewpoint of processability. Moreover, it is preferably 10 parts by mass or less, more preferably 5 parts by mass or less from the viewpoint of vulcanization rate.

<<Zinc oxide>>

A content of zinc oxide when compounded based on 100 parts by mass of the rubber component is preferably 0.5 parts by mass or more, more preferably 1 part by mass or more from the viewpoint of processability. Moreover, it is

preferably 10 parts by mass or less, more preferably 5 parts by mass or less from the viewpoint of abrasion resistance.

<<Vulcanizing agent>>

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more from the viewpoint of securing a sufficient vulcanization reaction. Moreover, it is preferably 5.0 parts by mass or less, more preferably 4.0 parts by mass or less, further preferably 3.0 parts by mass or less from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

<<Vulcanization accelerators

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Production>

The rubber composition according to the present invention can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

The kneading condition is not particularly limited. Examples of kneading include, in the base kneading step, a method of kneading at a discharge temperature at 150 to 170°C for 3 to 10 minutes, and in the final kneading step, a method of kneading at 70 to 110°C for 1 to 5 minutes. The vulcanization condition is not particularly limited. Examples of vulcanization include a method of vulcanizing at 150 to 200°C for 10 to 30 minutes.

The tire of the present invention composed of the rubber composition can be produced by a usual method using the rubber composition. That is, the tire can be produced by extruding an unvulcanized rubber composition compounded from the rubber component and other components as necessary into a tread shape, attaching it together with other tire members on a tire forming machine, and molding them by a usual method to form an unvulcanized tire, followed by

heating and pressurizing this unvulcanized tire in a vulcanizing machine. Besides, when the tread part is composed of a plurality of layers, the above-described tread is the outermost layer of the tread part.

<Application>

The tire of the present invention can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having the maximum load capacity of 1000 kg or less. Moreover, the tire of the present disclosure can be used as an all-season tire, a summer tire, a winter tire such as a studless tire. Among them, it is preferably used as a winter tire.

EXAMPLE

The present invention will be specifically described below based on Examples, but the present invention is not limited to Examples only.

<Various chemicals>

Various chemicals used in Examples and Comparative examples are collectively shown.

SBR1: Terminal-modified S-SBR produced in Production example 1 which will be described later (styrene content: 25% by mass, vinyl content: 25 mol%, Mw: 250,000, non-oil-extended product)
SBR2: HPR850 manufactured by JSR Corporation (styrene content: 27.5% by mass, vinyl content: 59.0% by mass, non-oil-extended product)
BR: UBEPOL BR (Registered Trademark) 150B manufactured by Ube Industries, Ltd. (cis content: 97%, Mw: 440,000)
Vulcanized rubber particle 1: Recycled rubber having a content of a natural rubber of 73% by mass (available from Muraoka Rubber Reclaiming Co., Ltd.)
Vulcanized rubber particle 2: Powdered rubber of rubber powder W2-A (available from ASAHI SAISEIGOMU Co., Ltd.)
Carbon Black: DIABLACK N220 manufactured by Mitsubishi Chemical Corporation ($N_2SA$: 115 $m^2/g$)
Silica: Ultrasil (Registered Trademark) VN3 manufactured by Evonik Degussa GmbH ($N_2SA$: 175 $m^2/g$)
Silane coupling agent: Si69 manufactured by Evonik Degussa GmbH (bis(3-triethoxysilylpropyl)tetrasulfide)
Oil: VivaTec 500 manufactured by H&R Group (TDAE oil)
Aromatic ring-containing resin: Sylvares SA85 manufactured by Kraton Corporation (copolymer of $\alpha$-methylstyrene and styrene, softening point: 85°C)
Wax: SUNNOC N manufactured by Ouchi Shinko Chemical Industry Co., Ltd.
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: HK 200-5 manufactured by Hosoi Chemical Industry Co., Ltd. (5% oil containing sulfur)
Vulcanization accelerator 1: Nocceler NS manufactured by Ouchi Shinko Chemical Industry Co., Ltd. (TBBS, N-tert-butyl-2-benzothiazolylsulfenamide)
Vulcanization accelerator 2: Nocceler D manufactured by Ouchi Shinko Chemical Industry Co., Ltd. (DPG, 1,3-diphenylguanidine)

(Production of SBR1)

An autoclave reactor subjected to nitrogen purge was charged with cyclohexane, tetrahydrofuran, styrene, and 1,3-butadiene. Temperature of contents in the reactor was adjusted to 20°C, and n-butyllithium was added to initiate polymerization. The polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent for modification. After completion of the polymerization reaction, 2,6-di-tert-butyl-p-cresol was added. Next, the mixture was subjected to removal of solvent by a steam stripping and dried by a heat roll whose temperature was adjusted to 110°C to obtain a SBR1.

<Production of unvulcanized rubber composition>

According to each compounding amount shown in Table 1, using a 1.7 L closed Banbury mixer, all chemicals other than sulfur and vulcanization accelerators were kneaded at a discharge temperature at 160°C for 4 minutes to obtain a kneaded product. Next, using an open roll, sulfur and vulcanization accelerators were added to the obtained kneaded product, and the mixture was kneaded for 4 minutes to obtain an unvulcanized rubber composition.

<Production of test tire>

Each unvulcanized rubber composition obtained was extruded into a shape of a tread having a tread pattern shown in FIG. 1 and attached together with other members to prepare a raw tire. Next, in a vulcanization step, the tire was subjected to press molding at 170°C for 20 minutes to obtain test tires shown in Tables 2 and 3.
Similarly, the tread pattern in FIG. 2 was used to produce each test tire shown in Table 4, and the tread pattern in FIG. 3 was used to produce each test tire shown in Table 5.

<Evaluation>

Measurement methods and evaluation methods are shown below.

(Tg of rubber composition)

For each test sample (length 20 mm × width 4 mm × thickness 1 mm) collected from inside a rubber layer of a tread part of a test tire so that a tire circumference direction is on a long side, using EPLEXOR series manufactured by gabo Systemtechnik GmbH, a temperature distribution curve of tan δ was measured under a condition of a frequency of 10 Hz, an initial strain of 10%, a dynamic strain of 0.5%, and a temperature rising rate of 2°C/min. A tan δ peak temperature corresponding to the largest tan δ value in the measured temperature distribution curve was defined as a glass transition point (Tg).

(Change in Tg of rubber composition before and after extraction with acetone (AE))

The Tg obtained above was defined as a Tg of a rubber composition before AE.
Next, each test sample for which a Tg was measured was extracted with acetone. Extraction with acetone was performed by immersing a test piece of each test vulcanized rubber sheet in acetone for 72 hours to extract soluble components in accordance with JIS K 6229. For each test piece after extraction, a Tg of a rubber composition was measured according to the above-described method to define the obtained Tg as a Tg of the rubber composition after AE.
A difference between a Tg of the rubber composition before AE and a Tg of the rubber composition after AE was defined as a change in Tg of the rubber composition before and after AE.

(0°C tan δ/30°C tan δ)

For each test sample (length 20 mm × width 4 mm × thickness 1 mm) prepared in the similar manner as above, 0°C tan δ was obtained by measuring a loss tangent under a condition of a temperature at 0°C, an initial strain of 10%, a dynamic strain of 2.5%, a frequency of 10 Hz, and an extension mode, using EPLEXOR series manufactured by gabo Systemtechnik GmbH.
For each test sample (length 20 mm × width 4 mm × thickness 1 mm) prepared in the similar manner as above, 30°C tan δ was obtained by measuring a loss tangent under a condition of a temperature at 30°C, an initial strain of 5%, a dynamic strain of 1%, a frequency of 10 Hz, and an extension mode, using EPLEXOR series manufactured by gabo Systemtechnik GmbH.
From 0°C tan δ and 30°C tan δ thus obtained, 0°C tan δ/30°C tan δ was calculated.

(Difference in rubber hardness between -10°C and 25°C)

For a sample for measuring hardness which was cut out from a tread part forming a grounding surface of each test tire so that a tire radial direction becomes a thickness direction, a type A durometer was pressed against the sample from the grounding surface side to measure a rubber hardness at -10°C in accordance with JIS K 6253.
A rubber hardness at 25°C was measured in the similar manner as above except that only the temperature was set to 25°C.
From the value of each rubber hardness obtained above, a difference between the rubber hardness at -10°C

and the rubber hardness at 25°C was calculated.

(Steering stability on snowy road surface)

A test vehicle equipped with each test tire ran on a test course with a snowy road surface, at which 20 drivers sensory-evaluated steering stability with a score on a scale of 1 to 5. Based on the following equation, a total of the scores thus obtained was indicated as an index with the reference Comparative example being as 100. The results show that the larger the index is, the more excellent the steering stability is.

$$\text{Steering stability index} = [(\text{total score of test tire}) / (\text{total score of reference Comparative example})] \times 100.$$

Table 1

(Rubber composition for tread)

| | Compounding | | | | | | | | | | | |
|---|---|---|---|---|---|---|---|---|---|---|---|---|
| | A | B | C | D | E | F | G | H | I | J | K | L |
| Compounding amount (part by mass) | | | | | | | | | | | | |
| SBR1 | 30 | 30 | 40 | 30 | 30 | 30 | 30 | 35 | 30 | 30 | 35 | 35 |
| SBR2 | 60 | 50 | 20 | 50 | 50 | 30 | 30 | 30 | 60 | 60 | 30 | 30 |
| BR | 10 | 20 | 40 | 20 | 20 | 40 | 40 | 35 | 10 | 10 | 35 | 35 |
| Vulcanized rubber particle 1 | - | - | - | - | - | - | - | - | 15 | - | 15 | - |
| Vulcanized rubber particle 2 | - | - | - | - | - | - | - | - | - | 15 | - | 15 |
| Carbon black | 5 | 5 | 5 | 5 | 5 | 5 | 5 | 5 | 5 | 5 | 5 | 5 |
| Silica | 100 | 75 | 75 | 100 | 75 | 75 | 75 | 75 | 100 | 100 | 75 | 75 |
| Silane coupling agent | 6 | 6 | 6 | 6 | 6 | 6 | 6 | 6 | 6 | 6 | 6 | 6 |
| Oil | 20 | 20 | 20 | 10 | 10 | 10 | 10 | 10 | 20 | 20 | 10 | 10 |
| Aromatic ring-containing resin | 0 | 0 | 0 | 10 | 10 | 5 | 10 | 10 | 0 | 0 | 10 | 10 |
| Wax | 2 | 2 | 2 | 2 | 2 | 2 | 2 | 2 | 2 | 2 | 2 | 2 |
| Antioxidant | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 5 | 1.5 | 1.5 | 1.5 |
| Vulcanization accelerator 1 | 2 | 2 | 2 | 2 | 2 | 2 | 2 | 2 | 2 | 2 | 2 | 2 |
| Vulcanization accelerator 2 | 2 | 2 | 2 | 2 | 2 | 2 | 2 | 2 | 2 | 2 | 2 | 2 |
| Physical property | | | | | | | | | | | | |
| S (% by mass) | 24.0 | 21.3 | 15.5 | 21.3 | 21.3 | 15.8 | 15.8 | 17.0 | 24.0 | 24.0 | 17.0 | 17.0 |
| Tg before AE (°C) | -14 | -23 | -41 | -18 | -18 | -22 | -30 | -27 | -14 | -14 | -27 | -27 |
| Tg after AE (°C) | -18 | -27 | -44 | -36 | -36 | -31 | -38 | -45 | -18 | -18 | -45 | -45 |

(continued)

| | Compounding | | | | | | | | | | | |
|---|---|---|---|---|---|---|---|---|---|---|---|---|
| | A | B | C | D | E | F | G | H | I | J | K | L |
| Change in Tg before and after AE (°C) | 4 | 4 | 3 | 18 | 18 | 9 | 8 | 18 | 4 | 4 | 18 | 18 |
| 30°C tan δ | 0.24 | 0.17 | 0.17 | 0.26 | 0.17 | 0.16 | 0.17 | 0.17 | 0.26 | 0.30 | 0.20 | 0.24 |
| 0°C tan δ | 0.46 | 0.33 | 0.25 | 0.50 | 0.46 | 0.31 | 0.32 | 0.39 | 0.46 | 0.47 | 0.4 | 0.42 |
| 0°C tan δ/30°C tan δ | 1.9 | 1.9 | 1.5 | 1.9 | 2.7 | 1.9 | 1.9 | 2.3 | 1.8 | 1.6 | 2.0 | 1.8 |
| Rubber hardness at -1 0°C | 75 | 69 | 67 | 74 | 70 | 71 | 68 | 68 | 75 | 77 | 68 | 70 |
| Rubber hardness at 25°C | 65 | 61 | 61 | 65 | 61 | 63 | 61 | 61 | 65 | 67 | 61 | 63 |
| Difference in rubber hardness | 10 | 8 | 6 | 9 | 9 | 8 | 7 | 7 | 10 | 10 | 7 | 7 |

Table 2

Tire size: 205/55R16

Tread pattern: FIG. 1

| | Comparative example | | | | | | Example | | | | |
|---|---|---|---|---|---|---|---|---|---|---|---|
| | 1 | 2 | 3 | 4 | 5 | 6 | 1 | 2 | 3 | 4 | 5 |
| Rubber composition for tread | | | | | | | | | | | |
| Compounding | A | A | B | C | D | E | F | G | H | H | H |
| Tg (°C) | -14 | -14 | -23 | -41 | -18 | -18 | -22 | -30 | -27 | -27 | -27 |
| S (total styrene amount) (% by mass) | 24.0 | 24.0 | 21.3 | 15.5 | 21.3 | 21.3 | 15.8 | 15.8 | 17.0 | 17.0 | 17.0 |
| Change in Tg before and after AE (°C) | 4 | 4 | 4 | 3 | 18 | 18 | 9 | 8 | 18 | 18 | 18 |
| 0°C tan δ/30°C tan δ | 1.9 | 1.9 | 1.9 | 1.5 | 1.9 | 2.7 | 1.9 | 1.9 | 2.3 | 2.3 | 2.3 |
| Difference between rubber hardness at -10°C and 35°C | 10 | 8 | 6 | 9 | 9 | 8 | 7 | 7 | 7 | 7 | 7 |
| Tread | | | | | | | | | | | |
| R (ratio of lateral groove area of center land part 40) | 9% | 15% | 8% | 8% | 15% | 15% | 15% | 15% | 15% | 15% | 15% |
| Tire | | | | | | | | | | | |
| Tire weight WT (kg) | 7.5 | 7.5 | 7.5 | 7.5 | 7.5 | 7.5 | 7.5 | 7.5 | 7.5 | 7.0 | 5.9 |
| Maximum load capacity $W_L$ (kg) | 515 | 515 | 515 | 515 | 515 | 515 | 515 | 515 | 515 | 515 | 515 |
| $WT/W_L$ | 0.015 | 0.015 | 0.015 | 0.015 | 0.015 | 0.015 | 0.015 | 0.015 | 0.015 | 0.014 | 0.011 |
| SIWT | 2.9 | 2.9 | 2.8 | 2.0 | 2.8 | 2.8 | 2.1 | 2.0 | 2.1 | 2.3 | 2.7 |
| Steering stability index (snowy road surface) | 94 | 92 | 96 | 100 | 98 | 96 | 104 | 108 | 116 | 110 | 110 |

| | Comparative example | | Example | |
|---|---|---|---|---|
| | 7 | 8 | 6 | 7 |
| Rubber composition for tread | | | | |
| Compounding | I | J | K | L |
| Tg (°C) | -14 | -14 | -27 | -27 |
| S (total styrene amount) (% by mass) | 24.0 | 24.0 | 17.0 | 17.0 |
| Change in Tg before and after AE (°C) | 4 | 4 | 18 | 18 |
| 0°C tan δ/30°C tan δ | 1.8 | 1.6 | 2.0 | 1.8 |
| Difference between rubber hardness at -10°C and 35°C | 10 | 10 | 7 | 7 |
| Tread | | | | |
| R (ratio of lateral groove area of center land part 40) | 15% | 15% | 15% | 15% |
| Tire | | | | |
| Tire weight WT (kg) | 7.5 | 7.5 | 7.5 | 7.5 |

(continued)

| Tire | | | | |
|---|---|---|---|---|
| Maximum load capacity $W_L$ (kg) | 515 | 515 | 515 | 515 |
| $WT/W_L$ | 0.015 | 0.015 | 0.015 | 0.015 |
| SIWT | 2.9 | 2.9 | 2.1 | 2.1 |
| Steering stability index (snowy road surface) | 94 | 96 | 112 | 110 |

Table 3

Tire size: 195/65R15

Tread pattern: FIG. 1

| | Comparative example | | | | | | Example | | | | |
|---|---|---|---|---|---|---|---|---|---|---|---|
| | 9 | 10 | 11 | 12 | 13 | 14 | 8 | 9 | 10 | 11 | 12 |
| Rubber composition for tread | | | | | | | | | | | |
| Compounding | A | A | B | C | D | E | F | G | H | H | H |
| Tg (°C) | -14 | -14 | -23 | -41 | -18 | -18 | -22 | -30 | -27 | -27 | -27 |
| S (total styrene amount) (% by mass) | 24.0 | 24.0 | 21.3 | 15.5 | 21.3 | 21.3 | 15.8 | 15.8 | 17.0 | 17.0 | 17.0 |
| Change in Tg before and after AE (°C) | 4 | 4 | 4 | 3 | 18 | 18 | 9 | 8 | 18 | 18 | 18 |
| 0°C tan δ/30°C tan δ | 1.9 | 1.9 | 1.9 | 1.5 | 1.9 | 2.7 | 1.9 | 1.9 | 2.3 | 2.3 | 2.3 |
| Difference between rubber hardness at -10°C and 35°C | 10 | 8 | 6 | 9 | 9 | 8 | 7 | 7 | 7 | 7 | 7 |
| Tread | | | | | | | | | | | |
| R (ratio of lateral groove area of center land part 40) | 9% | 15% | 8% | 8% | 15% | 15% | 15% | 15% | 15% | 15% | 15% |
| Tire | | | | | | | | | | | |
| Tire weight WT (kg) | 7.0 | 7.0 | 7.0 | 7.0 | 7.0 | 7.0 | 7.0 | 7.0 | 7.0 | 5.9 | 4.9 |
| Maximum load capacity $W_L$ (kg) | 534 | 534 | 534 | 534 | 534 | 534 | 534 | 534 | 534 | 534 | 534 |
| $WT/W_L$ | 0.013 | 0.013 | 0.013 | 0.013 | 0.013 | 0.013 | 0.013 | 0.013 | 0.013 | 0.011 | 0.014 |
| SIWT | 3.2 | 3.2 | 3.0 | 2.2 | 3.0 | 3.0 | 2.3 | 2.2 | 2.3 | 2.7 | 3.3 |
| Steering stability index (snowy road surface) | 96 | 92 | 98 | 100 | 96 | 94 | 106 | 112 | 116 | 114 | 110 |

| | Comparative example | | Example | |
|---|---|---|---|---|
| | 15 | 16 | 13 | 14 |
| Rubber composition for tread | | | | |
| Compounding | I | J | K | L |
| Tg (°C) | -14 | -14 | -27 | -27 |
| S (total styrene amount) (% by mass) | 24.0 | 24.0 | 17.0 | 17.0 |
| Change in Tg before and after AE (°C) | 4 | 4 | 18 | 18 |
| 0°C tan δ/30°C tan δ | 1.8 | 1.6 | 2.0 | 1.8 |
| Difference between rubber hardness at -10°C and 35°C | 10 | 10 | 7 | 7 |
| Tread | | | | |
| R (ratio of lateral groove area of center land part 40) | 15% | 15% | 15% | 15% |
| Tire | | | | |
| Tire weight WT (kg) | 7.0 | 7.0 | 7.0 | 7.0 |

(continued)

| Tire | | | | |
|---|---|---|---|---|
| Maximum load capacity $W_L$ (kg) | 534 | 534 | 534 | 534 |
| $WT/W_L$ | 0.013 | 0.013 | 0.013 | 0.013 |
| SIWT | 3.2 | 3.2 | 2.3 | 2.3 |
| Steering stability index (snowy road surface) | 96 | 94 | 112 | 108 |

Table 4

Tire size: 205/55R16

Tread pattern: FIG. 2

| | Comparative example | | | | | | Example | | | | |
|---|---|---|---|---|---|---|---|---|---|---|---|
| | 17 | 18 | 19 | 20 | 21 | 22 | 15 | 16 | 17 | 18 | 19 |
| Rubber composition for tread | | | | | | | | | | | |
| Compounding | A | A | B | C | D | E | F | G | H | H | H |
| Tg (°C) | -14 | -14 | -23 | -41 | -18 | -18 | -22 | -30 | -27 | -27 | -27 |
| S (total styrene amount) (% by mass) | 24.0 | 24.0 | 21.3 | 15.5 | 21.3 | 21.3 | 15.8 | 15.8 | 17.0 | 17.0 | 17.0 |
| Change in Tg before and after AE (°C) | 4 | 4 | 4 | 3 | 18 | 18 | 9 | 8 | 18 | 18 | 18 |
| 0°C tan δ/30°C tan δ | 1.9 | 1.9 | 1.9 | 1.5 | 1.9 | 2.7 | 1.9 | 1.9 | 2.3 | 2.3 | 2.3 |
| Difference between rubber hardness at -10°C and 35°C | 10 | 8 | 6 | 9 | 9 | 8 | 7 | 7 | 7 | 7 | 7 |
| Tread | | | | | | | | | | | |
| R (ratio of lateral groove area of center land part 40) | 9% | 15% | 8% | 8% | 15% | 15% | 15% | 15% | 15% | 15% | 15% |
| Tire | | | | | | | | | | | |
| Tire weight WT (kg) | 7.5 | 7.5 | 7.5 | 7.5 | 7.5 | 7.5 | 7.5 | 7.5 | 7.5 | 7.0 | 5.9 |
| Maximum load capacity $W_L$ (kg) | 515 | 515 | 515 | 515 | 515 | 515 | 515 | 515 | 515 | 515 | 515 |
| $WT/W_L$ | 0.015 | 0.015 | 0.015 | 0.015 | 0.015 | 0.015 | 0.015 | 0.015 | 0.015 | 0.014 | 0.011 |
| SIWT | 2.9 | 2.9 | 2.8 | 2.0 | 2.8 | 2.8 | 2.1 | 2.0 | 2.1 | 2.3 | 2.7 |
| Steering stability index (snowy road surface) | 96 | 92 | 98 | 100 | 98 | 96 | 110 | 114 | 120 | 118 | 112 |

| | Comparative example | | Example | |
|---|---|---|---|---|
| | 23 | 24 | 20 | 21 |
| Rubber composition for tread | | | | |
| Compounding | I | J | K | L |
| Tg (°C) | -14 | -14 | -27 | -27 |
| S (total styrene amount) (% by mass) | 24.0 | 24.0 | 17.0 | 17.0 |
| Change in Tg before and after AE (°C) | 4 | 4 | 18 | 18 |
| 0°C tan δ/30°C tan δ | 1.8 | 1.6 | 2.0 | 1.8 |
| Difference between rubber hardness at -10°C and 35°C | 10 | 10 | 7 | 7 |
| Tread | | | | |
| R (ratio of lateral groove area of center land part 40) | 15% | 15% | 15% | 15% |
| Tire | | | | |
| Tire weight WT (kg) | 7.5 | 7.5 | 7.5 | 7.5 |

(continued)

| Tire | | | | |
|---|---|---|---|---|
| Maximum load capacity $W_L$ (kg) | 515 | 515 | 515 | 515 |
| $WT/W_L$ | 0.015 | 0.015 | 0.015 | 0.015 |
| SIWT | 2.9 | 2.9 | 2.1 | 2.1 |
| Steering stability index (snowy road surface) | 98 | 94 | 112 | 110 |

Table 5

Tire size: 205/55R16

Tread pattern: FIG. 3

| | Comparative example | | | | | | Example | | | | |
|---|---|---|---|---|---|---|---|---|---|---|---|
| | 25 | 26 | 27 | 28 | 29 | 30 | 22 | 23 | 24 | 25 | 26 |
| Rubber composition for tread | | | | | | | | | | | |
| Compounding | A | A | B | C | D | E | F | G | H | H | H |
| Tg (°C) | -14 | -14 | -23 | -41 | -18 | -18 | -22 | -30 | -27 | -27 | -27 |
| S (total styrene amount) (% by mass) | 24.0 | 24.0 | 21.3 | 15.5 | 21.3 | 21.3 | 15.8 | 15.8 | 17.0 | 17.0 | 17.0 |
| Change in Tg before and after AE (°C) | 4 | 4 | 4 | 3 | 18 | 18 | 9 | 8 | 18 | 18 | 18 |
| 0°C tan δ/30°C tan δ | 1.9 | 1.9 | 1.9 | 1.5 | 1.9 | 2.7 | 1.9 | 1.9 | 2.3 | 2.3 | 2.3 |
| Difference between rubber hardness at -10°C and 35°C | 10 | 8 | 6 | 9 | 9 | 8 | 7 | 7 | 7 | 7 | 7 |
| Tread | | | | | | | | | | | |
| R (ratio of lateral groove area of center land part 40) | 7% | 13% | 6% | 6% | 13% | 13% | 13% | 13% | 13% | 13% | 13% |
| Tire | | | | | | | | | | | |
| Tire weight WT (kg) | 7.5 | 7.5 | 7.5 | 7.5 | 7.5 | 7.5 | 7.5 | 7.5 | 7.5 | 7.0 | 5.9 |
| Maximum load capacity WL (kg) | 515 | 515 | 515 | 515 | 515 | 515 | 515 | 515 | 515 | 515 | 515 |
| WT/WL | 0.015 | 0.015 | 0.015 | 0.015 | 0.015 | 0.015 | 0.015 | 0.015 | 0.015 | 0.014 | 0.011 |
| SIWT | 2.9 | 2.9 | 2.8 | 2.0 | 2.8 | 2.8 | 2.1 | 2.0 | 2.1 | 2.3 | 2.7 |
| Steering stability index (snowy road surface) | 94 | 90 | 98 | 100 | 98 | 96 | 108 | 112 | 118 | 116 | 110 |

| | Comparative example | | Example | |
|---|---|---|---|---|
| | 31 | 32 | 27 | 28 |
| Rubber composition for tread | | | | |
| Compounding | I | J | K | L |
| Tg (°C) | -14 | -14 | -27 | -27 |
| S (total styrene amount) (% by mass) | 24.0 | 24.0 | 17.0 | 17.0 |
| Change in Tg before and after AE (°C) | 4 | 4 | 18 | 18 |
| 0°C tan δ/30°C tan δ | 1.8 | 1.6 | 2.0 | 1.8 |
| Difference between rubber hardness at -10°C and 35°C | 10 | 10 | 7 | 7 |
| Tread | | | | |
| R (ratio of lateral groove area of center land part 40) | 13% | 13% | 13% | 13% |
| Tire | | | | |
| Tire weight WT (kg) | 7.5 | 7.5 | 7.5 | 7.5 |

(continued)

| Tire | | | | |
| --- | --- | --- | --- | --- |
| Maximum load capacity WL (kg) | 515 | 515 | 515 | 515 |
| WT/WL | 0.015 | 0.015 | 0.015 | 0.015 |
| SIWT | 2.9 | 2.9 | 2.1 | 2.1 |
| Steering stability index (snowy road surface) | 96 | 94 | 112 | 110 |

From the results in Tables 2 to 5, the tires in Examples show an excellent steering stability index as compared with the tires in Comparative examples, and it can be found that steering stability on a snowy road surface was improved.

REFERENCE SIGNS LIST

10. Circumferential groove
11. Center circumferential groove
12. Outermost circumferential groove
20. Lateral groove
21. Lateral groove (Sipe)
30. Shoulder land part
40. Center land part
41. Center land part

CL. Tire center line
Ti. Inner tread end
To. Outer tread end
TW. Tread width
W. Tire width direction

## Claims

**1.** A tire comprising a tread part,

the tread part having a tread end To placed outside a vehicle and a tread end Ti placed inside the vehicle when mounted on the vehicle, and having one or more circumferential grooves (10)
extending continuously in a tire circumferential direction and two or more land parts (30, 40, 41) partitioned by the circumferential grooves between the tread end To and the tread end Ti, the land part having a plurality of lateral grooves (20, 21)
extending in a tire width direction,
**characterised by** the the- tread part comprising a rubber composition having a glass transition temperature (Tg) of -40°C to -15°C,
the rubber composition comprising a rubber component having a total styrene amount (S) of less than 20.0% by mass in the rubber component,
wherein the rubber composition comprises a styrene-butadiene rubber,
wherein a lateral groove area ratio (R) of at least one land part of the land parts satisfies the following condition (1), and
wherein a weight (WT) (kg) and the maximum load capacity ($W_L$) (kg) of the tire satisfy the following condition (2):

$$(1)\ 10\% \leq R \leq 40\%$$

$$(2)\ WT/W_L \leq 0.015,$$

wherein the maximum load capacity ($W_L$) (kg) is determined by the following equations (A) and (B) when a tire cross-sectional width measured in a standardized state is defined as Lt (mm), a tire cross-sectional height is defined as Ht (mm), and a tire outer diameter is defined as Dt (mm), the above-described tire cross-sectional width Lt is a maximum width between outer surfaces of sidewalls excluding, if any, patterns or characters on the side surface of the tire in the standardized state, the above-described tire cross-sectional height Ht is a distance from the bottom surface of a bead part to the outermost surface of a tread, which is half a difference between the outer diameter of the tire and a nominal size of a rim,

(A)

$$V = \{(Dt/2)^2 - (Dt/2-Ht)^2\} \times \pi \times Lt \ (1)$$

(B)

$$W_L = 0.000011 \times V + 100 \ (2)$$

wherein the standardized state is a state where the tire is rim-assembled on a standardized rim and a standardized internal pressure is filled, and no load is applied.

**2.** The tire of claim 1, wherein a change in Tg of the rubber composition, before and after the rubber composition being immersed in acetone for 72 hours to extract a soluble component in accordance with JIS K 6229, is 15°C or greater.

**3.** The tire of claim 1 or 2, wherein the total styrene amount (S) and the tire weight (WT) satisfy the following condition (3):

$$(3)\ S/WT \leq 3.0$$

**4.** The tire of any one of claims 1 to 3, wherein the rubber composition satisfies the following condition (4):

$$(4)\ 0°C\ \tan\delta / 30°C\ \tan\delta > 2.0$$

(0°C tan $\delta$ represents a loss tangent measured under a condition of a temperature at 0°C, a frequency of 10 Hz, an initial strain of 10%, and a dynamic strain of 2.5%, and 30°C tan $\delta$ represents a loss tangent measured under a condition of a temperature at 30°C, a frequency of 10 Hz, an initial strain of 5%, and a dynamic strain of 1%.)

**5.** The tire of any one of claims 1 to 4, wherein a difference between a rubber hardness at -10°C and a rubber hardness at 25°C of the rubber composition is 3 to 18, wherein the rubber hardness is a hardness measured using a type A durometer.

**6.** The tire of any one of claims 1 to 5, wherein the rubber component comprises a modified styrene-butadiene rubber.

**7.** The tire of any one of claims 1 to 6, wherein the rubber composition comprises an aromatic ring-containing resin a content of which is 5 parts by mass or more based on 100 parts by mass of the rubber component.

**8.** The tire of any one of claims 1 to 7, wherein the rubber composition comprises a vulcanized rubber particle.

**9.** The tire of any one of claims 1 to 8, wherein the number of the circumferential grooves (10) is three or more, and the tread part has a pair of shoulder land parts (30) and two or more center land parts (40), the pair of shoulder land parts being partitioned by a pair of outermost circumferential grooves (12) located at each outermost side in a tire width direction and the two or more center land parts being located between the pair of shoulder land parts.

**10.** The tire of claim 9, wherein a groove width of at least one of the pair of outermost circumferential grooves is narrower than that of at least one of the circumferential grooves (11) that are not the pair of outermost circumferential grooves.

**11.** The tire of claims 9 or 10, wherein, of the pair of shoulder land parts, at least one shoulder land part has a lateral groove (20) one end of which lateral groove reaches a tread grounding end and the other end of which lateral groove does not reach the outermost circumferential groove but stays in the land part, of the plurality of lateral grooves.

**12.** The tire of any one of claims 9 to 11, wherein, of the two or more center land parts, at least one center land part has a lateral groove (21), one end of which lateral groove connects with one of the two circumferential grooves (11) partitioning the center land part and the other end of which lateral groove does not reach the other circumferential groove but stays in the land part, of the plurality of lateral grooves.

**13.** The tire of claim 12, wherein the two circumferential grooves partitioning the center land part consist of a circumferential groove having a large distance from a tire center line and a circumferential groove having a small distance

from the tire center line, the circumferential groove having a large distance from the center line being the circumferential groove with which the lateral groove connects.

## Patentansprüche

1. Reifen, umfassend einen Laufstreifenteil,

   wobei der Laufstreifenteil ein Laufstreifenende To, das außerhalb eines Fahrzeugs platziert ist, und ein Laufstreifenende Ti, das innerhalb des Fahrzeugs platziert ist, aufweist, wenn an dem Fahrzeug befestigt, und eine oder mehrere Umfangsrillen (10), die sich durchgehend in einer Reifenumfangsrichtung erstrecken, und zwei oder mehr Positivprofilteile (30, 40, 41) aufweist, die durch die Umfangsrillen zwischen dem Laufstreifenende To und dem Laufstreifenende Ti unterteilt sind, wobei der Positivprofilteil eine Mehrzahl an Querrillen (20, 21) aufweist, die sich in einer Reifenbreitenrichtung erstrecken,
   **dadurch gekennzeichnet, dass**
   der Laufstreifenteil eine Kautschukzusammensetzung umfasst, die eine Glasübergangstemperatur (Tg) von -40°C bis -15°C aufweist,
   wobei die Kautschukzusammensetzung eine Kautschukkomponente umfasst, die eine Gesamtstyrolmenge (S) von weniger als 20,0 Massen-% in der Kautschukkomponente aufweist,
   wobei die Kautschukzusammensetzung einen Styrol-Butadien-Kautschuk umfasst,
   wobei ein Querrillenflächenanteil (R) mindestens eines Positivprofilteils der Positivprofilteile der folgenden Bedingung (1) genügt, und
   wobei ein Gewicht (WT) (kg) und die maximale Tragfähigkeit ($W_L$) (kg) des Reifens der folgenden Bedingung (2) genügen:

   $$(1)\ 10\% \leq R \leq 40\%$$

   $$(2)\ WT/W_L \leq 0{,}015,$$

   wobei die maximale Tragfähigkeit ($W_L$) (kg) durch die folgenden Gleichungen (A) und (B) bestimmt ist, wenn eine in einem genormten Zustand gemessene Reifenquerschnittsbreite als Lt (mm) definiert ist, eine Reifenquerschnittshöhe als Ht (mm) definiert ist, und ein Reifenaußendurchmesser als Dt (mm) definiert ist, die oben beschriebene Reifenquerschnittsbreite Lt eine maximale Breite zwischen äußeren Oberflächen von Seitenwänden, unter Ausschluss, falls vorhanden, von Mustern oder Zeichen auf der seitlichen Oberfläche des Reifens in dem genormten Zustand ist, die oben beschriebene Reifenquerschnittshöhe Ht ein Abstand von der unteren Oberfläche eines Wulstteils zur äußersten Oberfläche eines Laufstreifens ist, welche die Hälfte einer Differenz zwischen dem Außendurchmesser des Reifens und einer Nenngröße einer Felge ist,

   $$(A)\quad V = \{(Dt/2)^2 - (Dt/2\text{-}Ht)^2\} \times \pi \times Lt\ \ (1)$$

   $$(B)\quad WL = 0{,}000011 \times V + 100\ \ (2)$$

   wobei der normierte Zustand ein Zustand ist, worin der Reifen auf eine genormte Felge aufgezogen ist und mit einem genormten Innendruck befüllt ist, und keine Last aufgebracht ist.

2. Reifen nach Anspruch 1, wobei eine Veränderung in Tg der Kautschukzusammensetzung, vor und nach Eintauchen der Kautschukzusammensetzung in Aceton für 72 Stunden, um gemäß JIS K 6229 eine lösliche Komponente zu extrahieren, 15°C oder größer ist.

3. Reifen nach Anspruch 1 oder 2, wobei die Gesamtstyrolmenge (S) und das Reifengewicht (WT) der folgenden Bedingung (3) genügen:

   $$(3)\ S/WT \leq 3{,}0$$

4. Reifen nach einem der Ansprüche 1 bis 3, wobei die Kautschukzusammensetzung der folgenden Bedingung (4) genügt:

$$(4)\ 0°C\ \tan\delta/30°C\ \tan\delta>2{,}0$$

(0°C tan δ stellt einen Verlusttangens dar, der unter Bedingungen einer Temperatur von 0°C, einer Frequenz von 10 Hz, einer Anfangsdehnung von 10% und einer dynamischen Dehnung von 2,5% gemessen ist, und 30°C tan δ stellt einen Verlusttangens dar, der unter Bedingungen einer Temperatur von 30°C, einer Frequenz von 10 Hz, einer Anfangsdehnung von 5% und einer dynamischen Dehnung von 1% gemessen ist.)

5. Reifen nach einem der Ansprüche 1 bis 4, wobei eine Differenz zwischen einer Kautschukhärte bei -10°C und einer Kautschukhärte bei 25°C der Kautschukzusammensetzung 3 bis 18 beträgt, wobei die Kautschukhärte eine unter Verwendung eines Typ-A-Durometers gemessene Härte ist.

6. Reifen nach einem der Ansprüche 1 bis 5, wobei die Kautschukkomponente einen modifizierten Styrol-Butadien-Kautschuk umfasst.

7. Reifen nach einem der Ansprüche 1 bis 6, wobei die Kautschukzusammensetzung ein Aromatenring-haltiges Harz umfasst, dessen Gehalt 5 Massenteile oder mehr beträgt, bezogen auf 100 Massenteile der Kautschukkomponente.

8. Reifen nach einem der Ansprüche 1 bis 7, wobei die Kautschukzusammensetzung ein vulkanisiertes Kautschukpartikel umfasst.

9. Reifen nach einem der Ansprüche 1 bis 8, wobei die Anzahl der Umfangsrillen (10) drei oder mehr beträgt, und der Laufstreifenteil ein Paar Schulterpositivprofilteile (30) und zwei oder mehr Zentrumspositivprofilteile (40) aufweist, wobei das Paar Schulterpositivprofilteile durch ein Paar äußerster Umfangsrillen (12) unterteilt ist, die sich an der jeweiligen äußersten Seite in einer Reifenbreitenrichtung befinden, und die zwei oder mehr Zentrumspositivprofilteile sich zwischen dem Paar Schulterpositivprofilteile befinden.

10. Reifen nach Anspruch 9, wobei eine Rillenbreite mindestens einer des Paars äußerster Umfangsrillen schmaler ist als diejenige mindestens einer der Umfangsrillen (11), die nicht das Paar äußerster Umfangsrillen sind.

11. Reifen nach Anspruch 9 oder 10, wobei, von dem Paar Schulterpositivprofilteile, mindestens ein Schulterpositivprofilteil eine Querrille (20), aus der Mehrzahl an Querrillen, aufweist, wobei ein Ende der Querrille ein Laufstreifen-Bodenkontakt-Ende erreicht und das andere Ende der Querrille nicht die äußerste Umfangsrille erreicht, sondern in dem Positivprofilteil bleibt.

12. Reifen nach einem der Ansprüche 9 bis 11, wobei, von den zwei oder mehr Zentrumspositivprofilteilen, mindestens ein Zentrumspositivprofilteil eine Querrille (21), aus der Mehrzahl an Querrillen, aufweist, wobei ein Ende der Querrille mit einer der beiden Umfangsrillen (11) verbunden ist, die den Zentrumspositivprofilteil unterteilen, und das andere Ende der Querrille nicht die andere Umfangsrille erreicht, sondern in dem Positivprofilbereich bleibt.

13. Reifen nach Anspruch 12, wobei die zwei Umfangsrillen, die den Zentrumpositivprofilteil unterteilen, aus einer Umfangsrille die einen großen Abstand von einer Reifenmittellinie aufweist, und einer Umfangsrille, die einen kleinen Abstand von der Reifenmittellinie aufweist, bestehen, wobei die Umfangsrille, die einen großen Abstand von der Mittellinie aufweist, die Umfangsrille ist, mit der die Querrille verbunden ist.

## Revendications

1. Pneumatique comprenant une partie de bande de roulement,

la partie de bande de roulement ayant une extrémité de bande de roulement To placée à l'extérieur d'un véhicule et une extrémité de bande de roulement Ti placée à l'intérieur du véhicule lorsqu'elles sont montées sur le véhicule et ayant un ou plusieurs sillons circonférentiels (10) s'étendant en continu dans une direction circonférentielle de pneumatique et deux ou plus de deux parties de bord de sillon (30, 40, 41) partitionnées par les sillons circonférentiels entre l'extrémité de bande de roulement To et l'extrémité de bande de roulement Ti, la

partie de bord de sillon ayant une pluralité de sillons latéraux (20, 21) s'étendant dans une direction de largeur de pneumatique,

**caractérisé par** la partie de bande de roulement comprenant une composition de caoutchouc ayant une température de transition vitreuse (Tg) de -40 °C à -15 °C,

la composition de caoutchouc comprenant un composant de caoutchouc ayant une quantité de styrène totale (S) de moins de 20,0 % en masse dans le composant de caoutchouc,

dans lequel la composition de caoutchouc comprend un caoutchouc de styrène-butadiène,

dans lequel un rapport de surface de sillon latéral (R) d'au moins une partie de bord de sillon des parties de bord de sillon satisfait la condition (1) suivante, et

dans lequel un poids (WT) (kg) et la capacité maximum de charge ($W_L$) (kg) du pneumatique satisfont la condition (2) suivante :

$$(1)\ 10\% \leq R \leq 40\%$$

$$(2)\ WT/W_L \leq 0{,}015,$$

dans lequel la capacité maximum de charge ($W_L$) (kg) est déterminée par les équations suivantes (A) et (B) lorsqu'une largeur transversale de pneumatique mesurée dans un état standardisé est définie comme Lt (mm), une hauteur transversale de pneumatique est définie comme Ht et un diamètre externe de pneumatique est défini comme Dt (mm), la largeur transversale de pneumatique Lt décrite ci-dessus est une largeur maximum entre les surfaces externes des parois latérales excluant, s'il y a lieu, les profils ou les caractères sur la surface latérale du pneumatique dans un état standardisé, la hauteur transversale de pneumatique Ht décrite ci-dessus est une distance de la surface de partie supérieure d'une partie de bille à la surface la plus externe d'une bande de roulement, qui est la moitié d'une différence entre le diamètre externe du pneumatique et une taille nominale d'une jante,

$$(A)\ V = \{(Dt/2)^2 - (Dt/2+Ht)^2\} \times \pi \times Lt\ (1)$$

$$(B)\ W_L = 0{,}000011 \times V + 100\ (2)$$

dans lequel l'état standardisé est un état où le pneumatique est assemblé sur une jante sur une jante standardisée et une pression interne standardisée est remplie et aucune charge n'est appliquée.

2. Pneumatique selon la revendication 1, dans lequel un changement dans la Tg de la composition de caoutchouc, avant et après que la composition de caoutchouc est immergée dans de l'acétone durant 72 heures pour extraire un composant soluble selon la norme JIS K 6229, est de 15 °C ou plus.

3. Pneumatique selon la revendication 1 ou 2, dans lequel la quantité de styrène totale (S) et le poids du pneumatique (WT) satisfont la condition (3) suivante :

$$(3)\ S/WT \leq 3{,}0$$

4. Pneumatique selon l'une quelconque des revendications 1 à 3, dans lequel la composition de caoutchouc satisfait la condition (4) suivante :

$$(4)\ 0\ °C\ \tan\delta / 30\ °C\ \tan\delta > 2{,}0$$

(0 °C tanδ représente une tangente de perte mesurée sous une condition d'une température à 0 °C, une fréquence de 10 Hz, une contrainte initiale de 10 % et une contrainte dynamique de 2,5 % et 30 °C tanδ représente une tangente de perte mesurée sous une condition d'une température à 30 °C, une fréquence de 10 Hz, une contrainte initiale de 5 % et une contrainte dynamique de 1 %).

5. Pneumatique selon l'une quelconque des revendications 1 à 4, dans lequel une différence entre une dureté de caoutchouc à -10 °C et une dureté de caoutchouc à 25 °C de la composition de caoutchouc est de 3 à 18, la dureté de caoutchouc étant une dureté mesurée en utilisant un duromètre de type A.

6. Pneumatique selon l'une quelconque des revendications 1 à 5, dans lequel le composant de caoutchouc comprend un caoutchouc de styrène-butadiène modifié.

7. Pneumatique selon l'une quelconque des revendications 1 à 6, dans lequel la composition de caoutchouc comprend une résine contenant un cycle aromatique dont une teneur est de 5 parties en masse ou plus sur la base de 100 parties en masse du composant de caoutchouc.

8. Pneumatique selon l'une quelconque des revendications 1 à 7, dans lequel la composition de caoutchouc comprend une particule de caoutchouc vulcanisée.

9. Pneumatique selon l'une quelconque des revendications 1 à 8, dans lequel le nombre de sillons circonférentiels (10) est de trois ou plus et la partie de bande de roulement a une paire de parties de bord de sillon d'épaulement (30) et deux ou plus de deux parties de bord de sillon centrales (40), la paire de parties de bord de sillon d'épaulement étant partitionnée par une paire de sillons circonférentiels les plus externes (12) situés à chaque côté le plus externe dans une direction de largeur de pneumatique et les deux ou plus de deux parties de bord de sillon centrales étant situées entre la paire de parties de bord de sillon d'épaulement.

10. Pneumatique selon la revendication 9, dans lequel une largeur de sillon d'au moins un de la paire de sillons circonférentiels les plus externes est plus étroite que celle d'au moins un des sillons circonférentiels (11) qui ne sont pas la paire de sillons circonférentiels les plus externes.

11. Pneumatique selon les revendications 9 ou 10, dans lequel, de la paire de parties de bord de sillon d'épaulement, au moins une partie d'un bord de sillon d'épaulement a un sillon latéral (20), une extrémité duquel sillon latéral atteint une extrémité de terre de bande de roulement et l'autre extrémité duquel sillon latéral n'atteint pas le sillon circonférentiel le plus externe mais reste dans la partie de bord de sillon, de la pluralité des sillons latéraux.

12. Pneumatique selon l'une quelconque des revendications 9 à 11, dans lequel, des deux ou plus de deux parties de bord de sillon centrales, au moins une partie de bord de sillon centrale a un sillon latéral (21), une extrémité duquel sillon latéral se connecte avec un des deux sillons circonférentiels (11) partitionnant la partie de bord de sillon centrale et l'autre extrémité duquel sillon latéral qui n'atteint pas l'autre sillon circonférentiel mais reste dans la partie de bord de sillon, de la pluralité des sillons latéraux.

13. Pneumatique selon la revendication 12, dans lequel les deux sillons circonférentiels partitionnant la partie de bord de sillon centrale sont constitués d'un sillon circonférentiel ayant une grande distance d'une ligne centrale de pneumatique et un sillon circonférentiel ayant une petite distance de la ligne centrale de pneumatique, le sillon circonférentiel ayant une grande distance de la ligne centrale étant le sillon circonférentiel avec lequel le sillon latéral se connecte.

FIG. 1

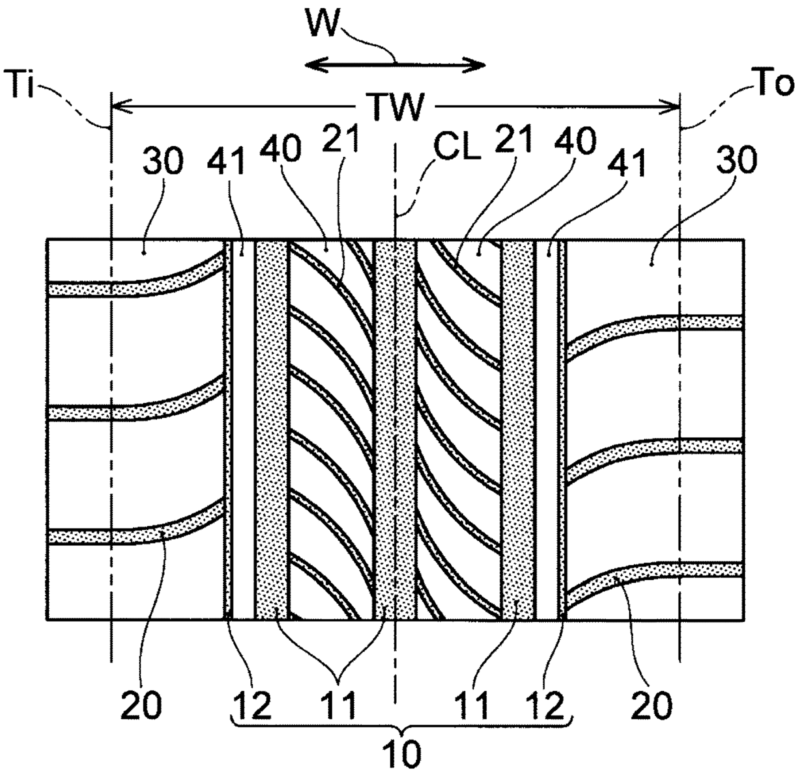
W
Ti
TW
To
30
41
40
21
CL
21
40
41
30
20
12
11
11
12
20
10

FIG. 2

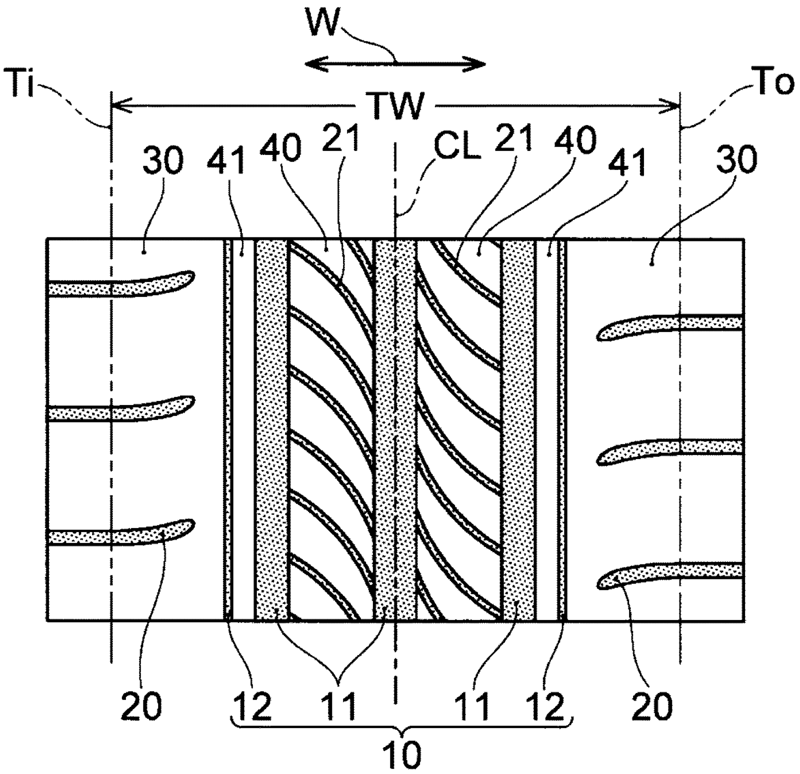
W
Ti
TW
To
30
41
40
21
CL
21
40
41
30
20
12
11
11
12
20
10

FIG. 3

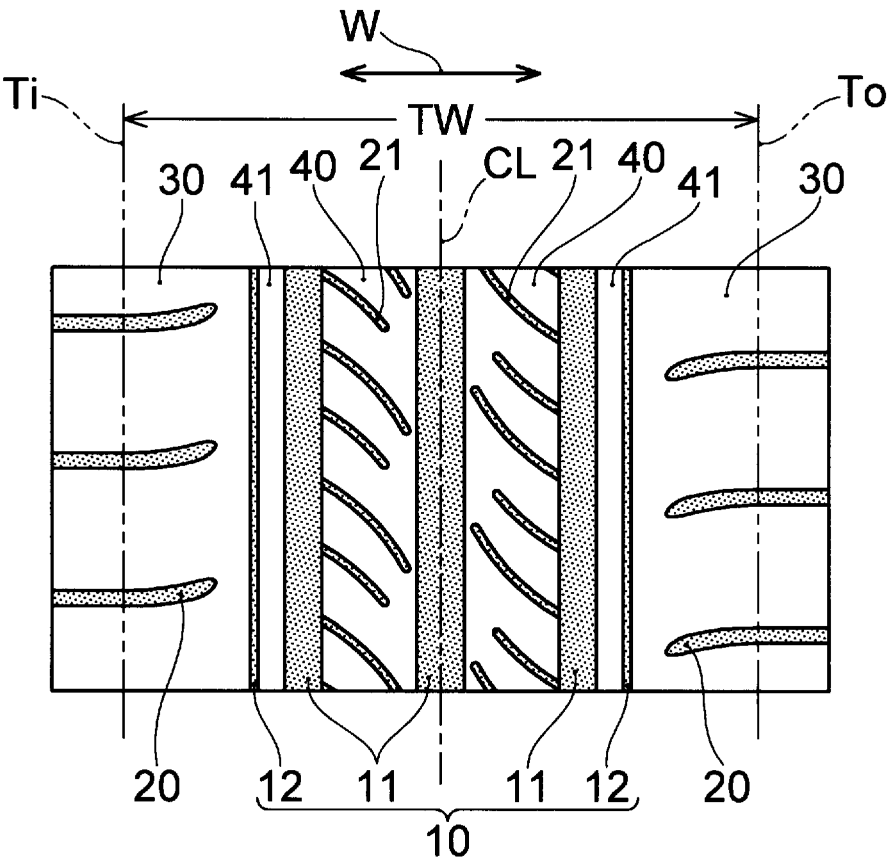

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014004844 A
- JP 2021025006 A
- WO 2019133007 A
- WO 2019239570 A